# EUROPEAN PATENT SPECIFICATION

(11) **EP 1 918 865 B1**
(45) Date of publication and mention of the grant of the patent: **29.08.2012**
(21) Application number: 07115549.3
(22) Date of filing: 03.09.2007
(51) Int. Cl.: G06Q 10/00

(54) **System, device, method, and program for controlling communication between radio frequency identification tag and network**
System, Vorrichtung, Verfahren und Programm zur Steuerung der Kommunikation zwischen einem Funkfrequenzidentifikations-Tag und einem Netzwerk
Système, dispositif, procédé, programme pour le contrôle de la communication entre une étiquette d'identification par radiofréquence et le réseau

(30) Priority: 31.10.2006 JP 2006295585
(43) Date of publication of application: 07.05.2008
(73) Proprietor: FUJITSU LIMITED, Kawasaki-shi, Kanagawa 211-8588 (JP)
(72) Inventor: Sato, Kazuo, Kawasaki-shi, Kanagawa 211-8588 (JP); Maeda, Tomohiko, Kawasaki-shi, Kanagawa 211-8588 (JP); Muraoka, Yoshitaka, Kawasaki-shi, Kanagawa 211-8588 (JP); Fuchida, Hidehiko, Kawasaki-shi, Kanagawa 211-8588 (JP); Saito, Shuko, Kawasaki-shi, Kanagawa 211-8588 (JP)
(74) Representative: Kreutzer, Ulrich

(56) References cited:
- EP-A- 1 189 163
- WO-A-03/060752
- US-A1- 2005 236 479
- US-A1- 2006 208 892
- PRABAKAR V ET AL: "Management of RFID-centric business networks using Web Services" 19 February 2006 (2006-02-19), TELECOMMUNICATIONS, 2005. AICT-ICIW '06. INTERNATIONAL CONFERENCE ON INTERNET AND WEB APPLICATIONS AND SERVICES/ADVANCED INTERNATIONAL CONFERENCE ON GUADELOPE, FRENCH CARIBBEAN 19-25 FEB. 2006, PISCATAWAY, NJ, USA,IEEE, PAGE(S) 133-133 , XP010898456 ISBN: 0-7695-2522-9 Section 1.3

## Description

### Background of the Invention

The present invention relates to a system, a device, a method and a program for controlling communication between a radio frequency identification (RF-ID) tag and a network according to the state of the network and a manufacturing method for manufacturing products using the control method.

### Description of the Related Art

Various management systems are used in the manufacturing and distribution fields. In those management systems, a discrete product and discrete components constituting the product are identified using some identification information and are managed using the identification information. For example, the management system manages progress in a manufacturing process and its distribution, individual components mounted on a product, test contents to be conducted for each product, its test result and the like. There are two types of management systems; an individual management system according to each individual management purpose and a management system obtained by integrating those individual management systems. However, since either of them manages using identification information, sometimes they are not separated in the following description.

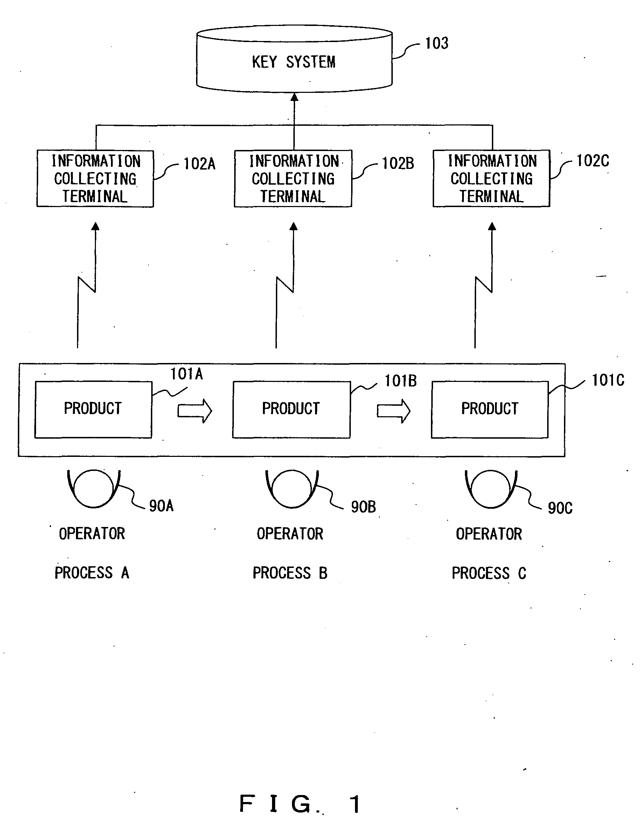

Fig. 1 shows how a management system conventionally uses identification information. In Fig. 1, a product 101 is manufactured by three processes A, B and C. In each process there are operators 90A, 90B and 90C. A key system 103 manages up to which process the manufacturing of the product 101 progresses using the identification information of the product 101. Information collecting terminals 102A-102C are provided for each process and these information collecting terminals 102A-102C and the key system 103 are connected by a network.

When the product 101 is in the process A (which is indicated by a reference numeral "101 A"), information collecting terminal 102A corresponding to the process A reads identification information from the product 101A (for example, a serial number different for each individual product) and transmits it to the key system 103 via the network. This can also, for example, be transmitted when the application of the process A to the product 101A is completed. In that case, the key system 103 manages the date of the transmission as the date of the completion of the application of the process A to the product 101 A in relation with the identification information of the product 101A.

Then, the product 10 1 is transported to the process B. Then, when the product 101 is in the process B (which is indicated by a reference numeral "101B"), similarly the information collecting terminal 102B corresponding to the process B reads identification information from the product 101B and transmits it to the key system 103 via the network.

Then, the product 101 is further transported to the process C. Then, when the product 101 is in the process C (which is indicated by a reference numeral "101C"), similarly the information collecting terminal 102C corresponding to the process C reads identification information from the product 101C and transmits it to the key system 103 via the network.

It should be noted that the products 101A-101C indicate the same product at different times and the information collecting terminals 102A-102C indicate a plurality of different devices.

Thus, by one of the information collecting terminals 102A-102C transmitting the identification information of the product 101 to the key system 103 in each process, the key system 103 can manage when an individual product 101 completes which process.

In this case, for the information collecting terminals 102A-102C, two types of a barcode reader and an RF-ID tag reader are used. The former is used earlier.

When the information collecting terminals 102A-102C are barcode readers, paper on which barcodes indicating identification information are printed is attached to the product 101 in advance or such paper is mounted together on a pallet on which the product 101 is mounted (this barcode is sometimes called "progress management barcode"). The information collecting terminals 102A-102C read the identification information of the product 101 by reading the barcode from the paper. In this case, if several conditions, such as the fact that the attached position of the paper is fixed and the like, are met, the information collecting terminals 102A-102C can also automatically read the identification information. However, sometimes human being (operators 90A-90C) has to bring the information collecting terminals 102A-102C to the positions of the barcode to manually read the identification information.

When the information collecting terminals 102A-102C are RF-ID tag readers too, similarly an RF-ID tag storing identification information is attached to an individual product 101 or such a RF-ID tag is mounted together on a pallet on which the product 101 is mounted. In this case, since an RF-ID tag stores identification information peculiar to it, this can be used as the identification information of the product 101. Since such a type of an RF-ID tag that stores simply identification information in order to aim individual identification is fairly inexpensive, it can also be used as shown in Fig. 1.

In this case, the RF-ID tag reader prefers to the barcode reader in that there is no need for human being to manually move the information collecting terminals 102A-102C. This is because although in the case of a barcode reader, there are some restrictions, for example, the reader must be located at the front of a barcode and the like, in order to read the barcode, in the case of an RF-ID tag reader, it is just sufficient for the information collecting terminals 102A-102C to be located within its communication range since identification information can be wirelessly read from the RF-ID tag. Therefore, if an RF-ID tag is used, the information collecting terminals 102A-102C can automatically read identification information without any manual work.

Even when either of a barcode or a RF-ID tag is used, identification information is inputted to the information collecting terminals 102A-102C via a network similarly.

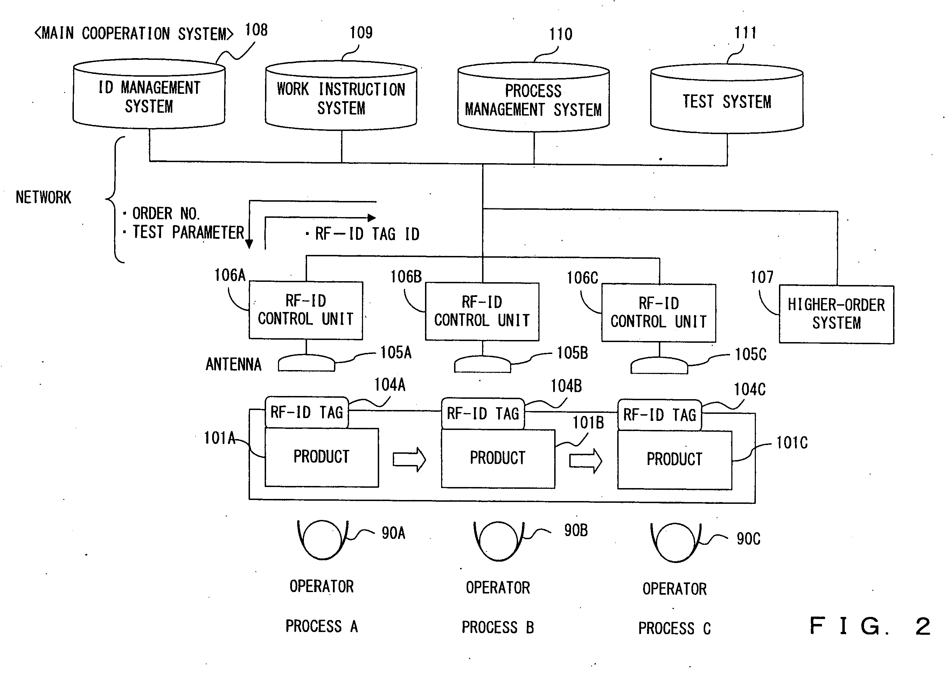

The prior case where an RF-ID tag is used is shown in Fig. 2 by detailing Fig. 1. Fig. 2 shows how a management system conventionally uses identification information read from an RF-ID tag 104.

In Fig. 2 too, a product 101 is manufactured by three processes A, B and C as in Fig. 1. In Fig. 2, the product 101 and the RF-ID tag 104 are related by attaching the RF-ID tag 104 to the product 101 or mounting it on the same pallet as the product 101. The product 101 and the RF-ID tag 104 are described as reference numerals "101 A" and "104A" in the process A, reference numerals "101B" and "104B" in the process B and reference numerals "101C" and "104C" in the process A, respectively. Specifically, each of the products 101A-101C and each of the RF-ID tags 104A-104C indicate one product 101 and one RF-ID tag 104 at a different time.

RF-ID control units 106A-106C are provided in relation with the processes A, B and C. These correspond to the information collecting terminals 102A-102C, respectively, shown in Fig. 1. The RF-ID control units 106A-106C are connected to antennas 105A-105C, respectively, and wirelessly reads information from the RF-ID tags 104A-104C, respectively, via the antennas 105A-105C.

In Fig. 2, a higher-order system 107, an ID management system 108, a work instruction system 109, a process management system 110 and a test system 111 correspond to the key system shown in Fig. 1. Each of these systems is connected to the RF-ID control units 106A-106C via a network. These systems can be said to be "higher-order systems" corresponding to the RF-ID control units 106A-106C, respectively, for the reason why the RF-ID control units 106A-106C (directly or indirectly) use identification information read from the RF-ID tags 104A-104C, respectively.

These system not only simply receive identification information from the RF-ID control units 106A-106C but sometimes also transmit information corresponding to the received identification information to the RF-ID control units 106A-106C. Such a case is described below.

A test for checking whether a test program is correctly executed in a product mounting an electronic circuit is generally applied to the product. It is assumed that such a test is conducted in the process C shown in Fig. 2. In this case, the operation of the RF-ID control unit 106C in the process C is as follows.
(c1) Identification information (that is, RF-ID tag ID peculiar to the RF-ID tag 104C) is read from RF-ID tag 104C using the antenna 105C.
(c2) The ID management system 108 is referenced using the read RF-ID tag ID via a network and an order No. and a test parameter, corresponding to the RF-ID tag ID are obtained. It is assumed that the ID management system 108 manages RF-ID tag IDs in relation with a variety of information. The "order No." differs for each individual product and is assigned to a product to be manufactured at the starting time of manufacturing. The "test parameter" is needed to specify a test program.
(c3) The obtained order No. and test program are transmitted to the test system 111 via the network and the test program is downloaded from the test system 111.

In this case, the RF-ID control units 106A-106C, which are not shown in Fig. 2, are installed as a part of a computer terminal with a general configuration. Therefore, for example, by the operator 90C relating the terminal to the product 101C, the program downloaded in (c3) is read into the product 101C, the program is executed and a test is conducted. For example, after the test, the RF-ID control unit 106C also reports that the application of the process C to a product is completed, which is described with reference with Fig. 1.

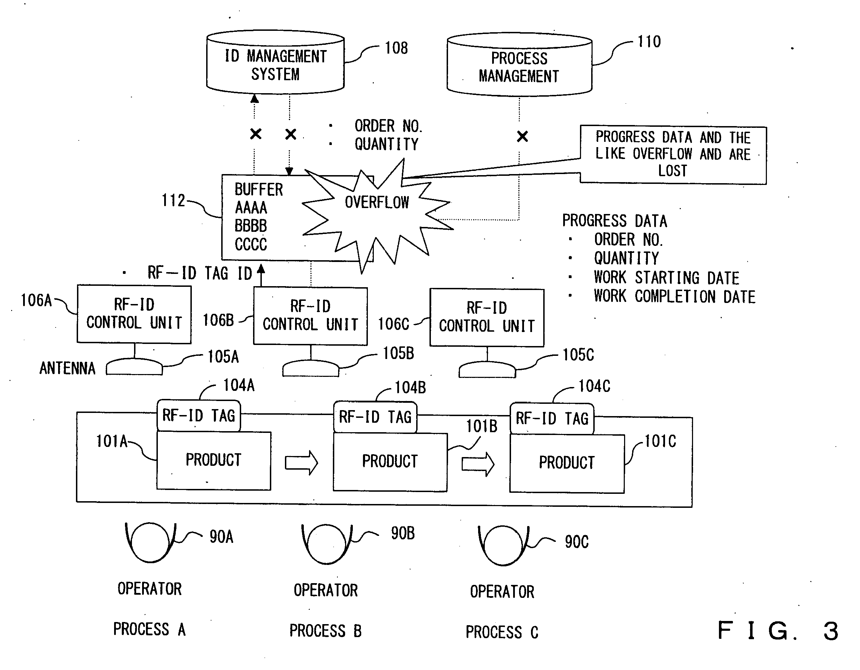

However, the above-described prior method has a problem that the deterioration of a network state and the system-down of one system become the bottleneck of the entire manufacturing process. This problem is described below with reference to Fig. 3. Fig. 3 can be obtained by extracting parts relating to this problem and emphasizing a buffer 112 provided for the RF-ID control unit 106B.

Generally, one plant has a plurality of production lines and simultaneously manufactures many products by each production line. Therefore, when using various systems via a network, as shown in Fig. 2, the amount of network load tends to increase.

When communication delays due to a large amount of load or communication becomes unavailable due to some reason, in order to recover from the failure, for example, a system manager checks what phenomenon occurs, specifies its cause, works out a solution and executes the solution. However, during the period until the network recovers from the failure, the various systems shown in Fig. 2 cannot be used via the network (or it takes much time to use the various systems). Therefore, even when completing its own process, each of the operators 90A-90C at the spot cannot proceed to a subsequent process. Therefore, time is wasted away without any work.

In order to avoid such a phenomenon, as shown in Fig. 3, each of the RF-ID control units 106A-106C is provided with the buffer 112. The using method of the buffer 112 is described below assuming the following two points.
- In the process B, after the entire work (assembly, processing, etc.) of the product 101B is completed, the completion of the process B is reported to the process management system 110.
- For example, by the operator 90B pushing a prescribed button at the starting and completion times of the process B, the buffer 112 in the RF-ID control unit 106B stores the process starting and completion dates.

Under these assumptions, the RF-ID control unit 106B operates as follows.
(b1) RF-ID tag ID (identification information) is read from the RF-Id tag 104B, using the antenna 105B.
(b2) The read RF-ID tag ID is stored in the buffer 112.
(b3) The product 101B is transported to a subsequent process C.
(b4) The ID management system 108 is referenced using the RF-ID tag ID stored in the buffer 112 as a key via the network and an order No. and quantity, corresponding to the RF-ID tag ID are obtained. As described in (c2), the ID management system 108 manages RF-ID tag IDs in relation with a variety of information and the quantity is one example of such information. In this case, the "quantity" is the production quantity of a lot to which the product belongs.
(b5) The already used RF-ID tag ID is erased from the buffer 112.
(b6) One set of progress data is generated by attaching the starting and completion dates of the process B to the obtained order No. and quantity and the generated progress data is stored in the buffer 112.
(b7) The progress data stored in the buffer 112 is read into the process management system 110 via the network.
(b8) Upon receipt of an acknowledge signal (ACK signal) indicating the completion of the writing, the already used progress data is erased from the buffer 112.

If the buffer 112 is used as described above even when (b4) and (b7)-(b8) take much time in communication, due to the failure of the network, in (b3), the product 101B is already transported to the subsequent process C. Therefore, work can be progressed without any useless waiting time. Specifically, the provision of the buffer 112 can absorb the affect of the communication delay.

However, if a network failure, such as communication delay or the like, prolongs, products are sequentially transported and their data is stored in the buffer 112. In that case, data cannot be erased from the buffer 112 and the buffer 112 overflows. As a result, data to be stored is lost without being stored in any place.

When a system, such as the ID management system 108 or the like, cannot respond, the above-described (b4) cannot be finished. Therefore, stages (b5) and after cannot be performed. Specifically, if some specific system downs even when there is no failure in the entire network, the data of (b2) continues to be stored and the buffer 112 overflows similarly.

In order to prevent such overflow, when the amount of data stored in the buffer 112 exceeds a prescribed threshold and approaches the capacity of the buffer 112, at that time point, the production line must be compulsorily stopped. For example, when the used amount of the buffer 112 provided for the RF-ID control unit 106B of the process B increases, the entire production line consisting of the three processes shown in Fig. 3 must be stopped. In this case, sometimes a buffer provided for the RF-ID control unit 106A or 106C, which is not shown in Fig. 3, may have allowance in its capacity and sometimes work may be already completed in each process. However, in order to prevent data from being lost from the buffer 112 of the RF-ID control unit 106B, the entire production line must be stopped. As a result, the operator 90A, 90B or 90C of each process must simply wait until the failure of the network or a system is recovered.

Generally, when the failure of the network or a system is due to hardware, its restoration often takes much time. If the infrastructure related facility of the network or a server implementing a system fails due to hardware, sometimes its restoration takes several hours to several days. If hardware fails due to a natural disaster or the like, its restoration may take more time.

Such a long stoppage of the entire production line is inefficient. However, if in order to avoid the stoppage, the overflow of the buffer 112 is neglected, this time a large amount of data corresponding to the long time is lost and the recovery of data become impossible, thereby also disturbing the operation of various management systems.

WO 03/060752 A teaches to record a certain amount of history within a network infrastructure in a data storage in a real time item tracking system.

US 2006/208892 A1 shows a mobile portal for RF-ID applications without need for real time access for an RF-ID interrogator.

US 2005/236479 A1 shows wireless communication via a network system with tags attached on goods in recording of location event information.

PRABAKAR V ET AL: "Management of RFID-centric business networks using Web Services" 19 February 2006 (2006-02-19), TELECOMMUNICATIONS, 2005. AICT-ICIW '06. INTERNATIONAL CONFERENCE ON INTERNET AND WEB APPLICATIONS AND SERVICES/ADVANCED INTERNATIONAL CONFERENCE ON GUADELOPE; FRENCH CARIBBEAN 19-25 FEB. 2006, PISCATAWAY; NJ; USA; IEEE; PAGE(S) 133-133; ISBN: 0-7695-2522-9 shows a network system having an RF-ID reader configured to forward tag data to a data base and write information into the tag from the data base.

EP-A-1 189 163 teaches identification of stages in a logistic chain using RF-ID tags attached on items.

### Summary of the Invention

It is an object of the present invention to control communication between a network to which a management system using identification information stored in an RF-ID tag is connectable and the RF-ID tag to prevent data and useless waiting time from being lost and occurring, respectively, even when the network or its management system fails.

The invention has been defined in the appended claims.

The first aspect of the present invention is a control system for controlling communication between a management system for managing the work process of a product corresponding to an RF-ID tag using identification information stored in the RF-ID tag and a plurality of first radio communication units each of which corresponds to one stage of the work processes, and reads and writes the information from and into the RF-ID tag by using radio communication, via a network.

The control system comprises a network state monitor unit for monitoring the state of the network and outputting its network state information indicating the state, a determination unit for determining in which mode the network should be operated according to the network state information, in a non-network mode or a network mode, a control unit for enabling a first radio communication unit which reads the identification information from the RF-ID tag when it is determined to operate it in the non-network mode to write additional information corresponding to a stage corresponding to the first radio communication unit into the RF-ID tag and to transmit it to the management system when it is determined to operate it in the network mode and an information collecting unit provided with a second radio communication unit for reading the identification information by using radio communication and its written additional information from the RF-ID tag and a first storage unit for storing the read identification information and additional information.

The second aspect of the present invention is a manufacturing method in which the control system in the first aspect is applied to a manufacturing method for manufacturing a product by a plurality of processes while managing the manufacturing process of the product.

The third aspect of the present invention is a control device comprising a network communication unit for communicating via a network, and the determination unit and the control unit of the control system in the first aspect.

The fourth aspect of the present invention is a method for a computer controlling the communication between a management system for managing the work process of a product corresponding to an RF-ID tag using identification information stored in the RF-ID tag and a plurality of radio communication units each of which corresponds to one stage of the work processes, and reads and writes the information from and into the RF-ID tag by using radio communication, via a network.

The method comprises an identification information receiving step of receiving the identification information which one of the plurality of radio communication units reads from the RF-ID tag from the radio communication unit, a determination step of determining in which mode the network should be operated according to the network state information indicating the state of the network, in a non-network mode or a network mode, a write instruction issuance step of issuing an instruction to enable the radio communication unit which reads the identification information in the identification information receiving step to write additional information corresponding to a stage corresponding to the radio communication unit into the RF-ID tag when it is determined to operate it in the non-network mode in the determination step and a transmission control step of controlling to transmit the additional information to the management system when it is determined to operate it in the network mode in the determination step.

The fifth aspect of the present invention is a program for enabling a computer to perform the method in the fourth aspect.

In any of the above-described aspects, it is determined to operate it either in the non-network mode or the network mode according to the network state information. For the network information state information, the amount of load of the network or a time to be needed to communicate via the network can also be used. Additional information corresponding to a focused stage of the work process is transmitted to a management system in the network mode, and is written into an RF-ID tag in the non-network mode.

By constituting the determination unit and the determination step in such a way that the network mode is selected if the network state information indicates that the network state is good and the non-network mode is selected if the network state information indicates that the network state is bad, the loss of data and the occurrence of a useless waiting time, which are the prior problems, can be prevented for the following reason.

When the network state deteriorates (for example, when the amount of network load or a time needed to communicate with a management system via the network increases), the non-network mode is selected according to the network state information. Then, additional information is written into an RF-ID tag.

Therefore, according to the present invention, even when the network state deteriorates, the prior problem that a buffer overflows due to writing into a management system and data is lost does not occur. Since according to the present invention, additional information is already written into an RF-ID tag even when the network state deteriorates, this additional information can be used later. Therefore, work in a subsequent stage can be started in a work process and a management system can use the additional information written into the RF-ID tag after the network state recovers later, thereby preventing an operator from waiting uselessly.

### Brief Description of the Drawings

Fig. 1 shows how a management system conventionally uses identification information;
Fig. 2 shows how a management system conventionally uses identification information read from an RF-ID tag;
Fig. 3 shows the problems shown in Fig. 2;
Fig. 4 shows the configuration of a system in one preferred embodiment of the present invention in the case where it is applied to the production line of a product;
Fig. 5 shows related components outside the RF-ID control unit and a functional configuration inside it;
Fig. 6 shows various types pf data;
Fig. 7 is a flowchart showing the write process of progress data and the switching of operation modes;
Fig. 8 shows the case where a failure continues; and
Fig. 9 is a flowchart showing the recovery operation from a failure.

### Description of the Preferred Embodiments

The preferred embodiments of the present invention are described in detail below with reference to the drawings.

The shape, size, communication method (depending on which to use, electromagnetic induction, an electric wave etc., a frequency/modulation method or the like), of a term "RF-ID tag" used below, whether or not its power supply is built in (that is, whether it is active or passive), the capacity of its rewritable memory or the like are arbitrary. Specifically, a term "RF-ID tag" is used below as a general description of memory to which peculiar identification information is assigned, which is provided with a radio communication function and from/into which information can be read and written by using radio communication.

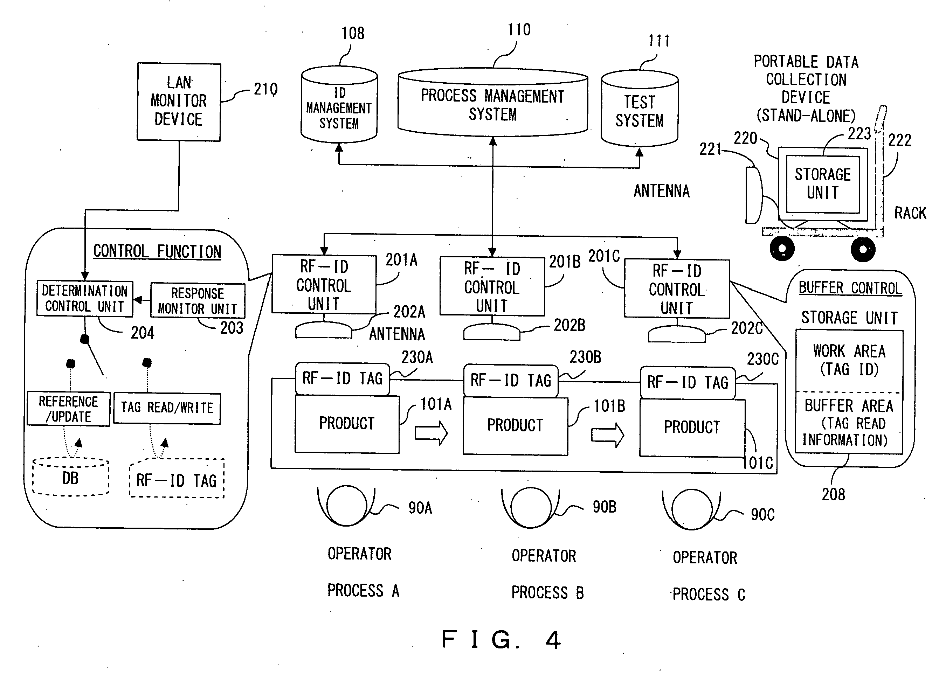

Fig. 4 shows the configuration of a system in one preferred embodiment of the present invention in the case where it is applied to the production line of a product.

The production line shown in Fig. 4 is composed of three processes A, B and C. In the system shown in Fig. 4, by attaching an RF-ID tag 230 to a product 101, mounting the product 101 and the RF-ID tag 230 on the same pallet or the like, the RF-ID tag 230 is related to the product 101. In which process the product 101 and the RF-ID tag 230 are located in the following drawings is indicated by a reference numeral with an affix. Specifically, the product 101 and the RF-ID tag which are in the processes A are indicated by reference numerals "101A" and "230A", respectively, those in the processes B are indicated by reference numerals "101B" and "230B", respectively, and those in the processes C are indicated by reference numerals "101C" and "230C", respectively.

RF-ID control units 201A-201C are provided in relation with each process. The RF-ID control units 201A-201C are connected to antennas 202A-202C, respectively, as radio communication units and is connected to various systems (only an ID management system 108, a process management system 110 and a test system 11 are shown in Fig. 4). The RF-ID control units 201A-201C are installed as a part of a computer terminal, which are not shown in Fig. 4.

The system shown in Fig. 4 comprises a LAN monitor device 210 for monitoring the load state of a local area network (LAN). It further comprises a portable data collection device 220 which is provided with an antenna 221 as a radio communication unit with a function to read information from the RF-ID tag 230 by using radio communication, and a function to write information into it by using radio communication, and a storage unit 223 for storing data, and is mounted on a rack 222.

Although the RF-ID tags 104A-104C shown in Fig. 2 are read-only RF-ID tags simply storing identification information (more specifically RF-ID tag IDs), the RF-ID tags 230A-230C of this preferred embodiment comprises writable memory, which is not shown in Fig. 4. In accordance with it, the antennas 202A-202C is provided with a function to write information into an RF-ID tag by using radio communication in addition to a function to read information from the RF-ID tag by using radio communication.

Each of the RF-ID control units 201A-201C comprises a response monitor unit 203, a determination control unit 204 and a storage unit 208. The storage unit 208 comprises a work area and a buffer area. The detailed operation of each unit constituting the system shown in Fig. 4 is described later.

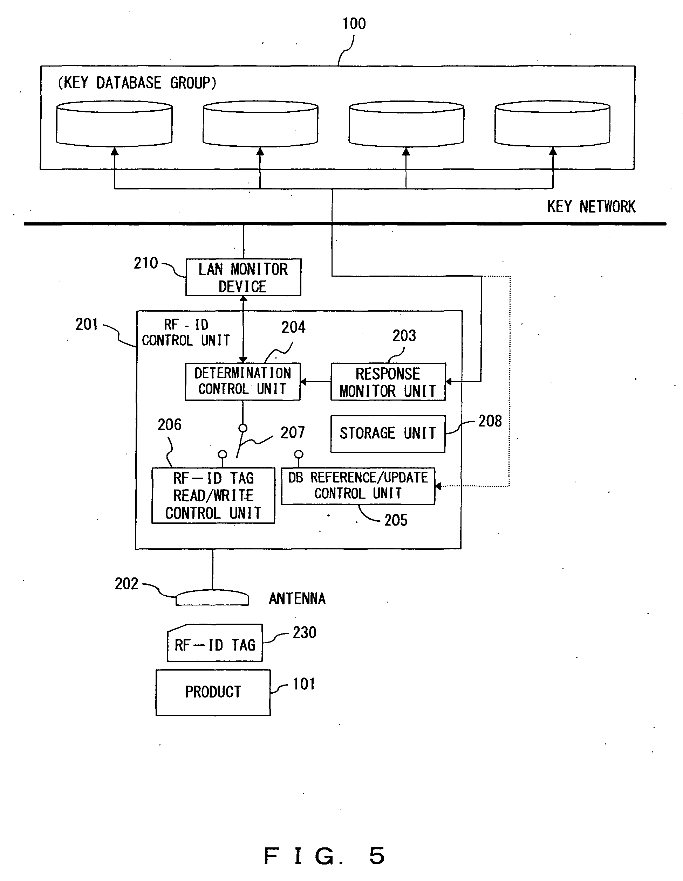

Fig. 5 shows related components connected to outside the RF-ID control unit 201 and a functional configuration inside it. Each of the RF-ID control units 201A-201C has the configuration shown in Fig. 5.

The key database group 100 shown in Fig. 5 is the database group of an integral management system, including the ID management system 108, process management system 110, test system 111 or the like shown in Fig. 4. Although in the network shown in Fig. 5, the key database group 100, the LAN monitor device 210 and RF-ID control unit 201 are connected to the key network, the specific configuration of the network is arbitrary. It is sufficient only if the RF-ID control unit 201 is able to operate the database of the key database group 100 (to refer in order to read information, and to add and update a record in order to write information).

The antenna 202, LAN monitor device 210, RF-ID tag 230 and product 101 located outside the RF-ID control unit 201 in Fig. 5 are the same as those shown in Fig. 4.

The RF-ID control unit 201 comprises the response monitor unit 203, the determination control unit 204, a DB reference/update control unit 205, an RF-ID tag read/write control unit 206, a switching control unit 207 and the storage unit 208.

The response monitor unit 203 monitors a time needed for the RF-ID control unit 201 to communicate with the key database group 100, and outputs an alarm to the determination control unit 204 if it is too much, whose detail is described later. The cases where the communication takes too much time, for example, are the case where a failure occurs in the key network, the case where accesses are abnormally centered to a database to be communicated of the key database group 100, the case where a server managing the database fails or the like.

The load state of an LAN monitored by the LAN monitor device 210 and an alarm from the response monitor unit 203 are inputted to the determination control unit 204.

The determination control unit 204 determines in which mode it should be operated, in the network mode or in the non-network mode, which is described later, according to the input.

In this preferred embodiment, the DB reference/update control unit 205 is used in the network mode, and the RF-ID tag read/write control unit 206 is used in the non-network mode, which is described in detail later. In another preferred embodiment, both the DB reference/update control unit 205 and the RF-ID tag read/write control unit 206 can also be used in the network mode. The switching control unit 207 transmits a control signal to each of the RF-ID tag read/write control unit 206 according to the determination of the determination control unit 204.

The RF-ID tag read/write control unit 206 controls to read/write information from/into the RF-ID tag 230, using the antenna 202. The DB reference/update control unit 205 controls the reference and update of the database in the key database group 100 via the network. The response monitor unit 203 monitors communication for the reference/update.

The storage unit 208 stores information obtained by reading from the RF-ID tag 230 using the antenna 202, referring to the key database group 100 and the like. For the storage unit 208, either volatile memory, such as random-access memory (RAM) or the like or non-volatile memory, such as flash memory or the like can be used.

Of the functional blocks shown in Fig. 5, the storage unit 208 is realized by hardware, but the response monitor unit 203, the determination control unit 204, all of the DB reference/update control unit 205, the RF-ID tag read/write control unit 206 and the switching control unit 207 can be realized by any of hardware, software, firmware or their combination. Alternatively, some functional blocks can also be realized by hardware and the others can also be realized by software.

For example, the hardware of the RF-ID control unit 201 comprises RAM, read-only memory (ROM) and a central processing unit (CPU) which can also execute a program stored in the ROM while using the RAM as work memory to realize all of the response monitor unit 203, the determination control unit 204, the DB reference/update control unit 205, the RF-ID tag read/write control unit 206 and the switching control unit 207. In that case, the RAM can also be used as the storage unit 208.

The RF-ID control unit 201 can also be installed as a part of a computer comprising RAM, ROM, a CPU, a hard disk, an input/output device and the like. In that case, for example, a program corresponding to each functional block constituting the RF-ID control unit 201 can also be stored in the ROM in advance, and by the CPU executing the program, the RF-ID control unit 201 can also be realized. In this case, a program for performing processes other than those performed by the RF-ID control unit 201 can also further be stored in the ROM and the CPU can also execute the program.

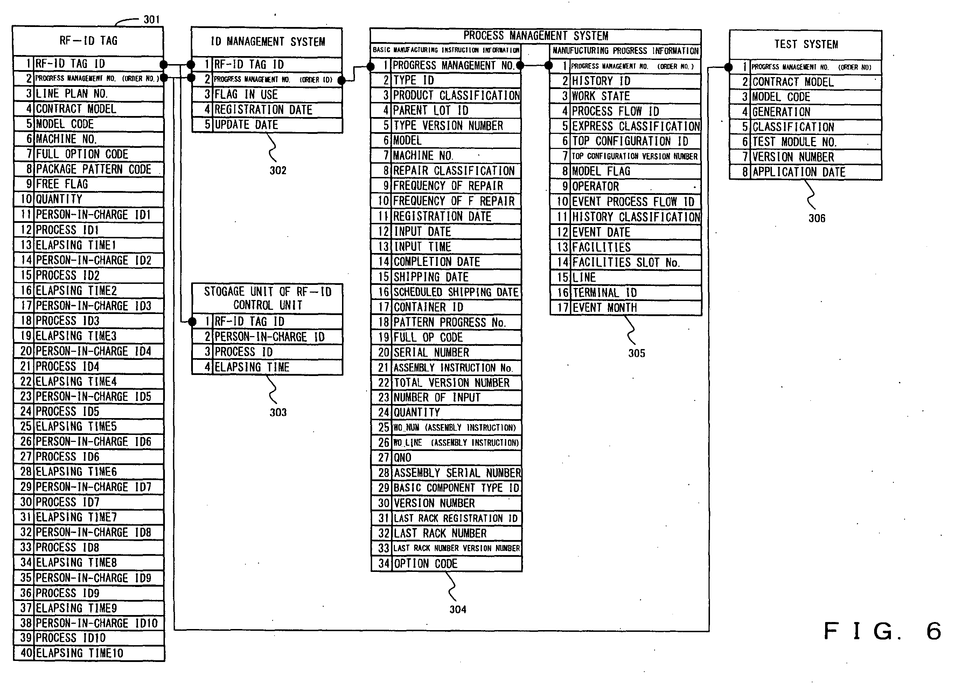

Next, examples of various data used in this preferred embodiment are described with reference to Fig. 6. Data to be used is not limited to that shown in Fig. 6 and data which is not shown in Fig. 6 or only part of the data shown in Fig. 6 can also be used.

Fig. 6 shows the configuration of each of information 301 stored in the RF-ID tag 230, information 302 stored in a table provided for the ID management system 108, information 303 stored in the buffer area of the storage unit 208 of the RF-ID control unit 201, information 304 and 305 stored in two tables provided for the process management system 110 and information 306 stored a table provided for the test system 111. In Fig. 6, their configurations are shown by item lists. Item lists 301-306 has item numbers and descriptions on the left and right sides, respectively, for convenience' sake of reference. Lines connecting items indicate correspondence that the same data is also used in another place.

As shown in the item list 301, the RF-ID tag 230 can store items 1-40. These items can be classified into three meaning groups.

The first group is composed of only its item 1. The RF-ID tag ID in the item 1 is a peculiar ID assigned when the RF-ID tag 230 is manufactured. The RF-ID tag ID is identification information for identifying an individual RF-ID tag and is stored in its non-writable area. Therefore, the RF-ID tag ID is invariable.

The second group is composed of items 2-10 and indicates the basic information about a product 101 to which the RF-ID tag 230 is related. These items are written into the writable memory area of the RF-ID tag 230. In this preferred embodiment, when the product 101 is completed, the RF-ID tag 230 is collected and is reused for another product 101 to be manufactured later. Therefore, the items of the second group are rewritten every time it is reused.

Item 2 progress management No. is also called "order No." One peculiar number is assigned to one product 101 as its progress management No. Specifically, this is a number for identifying an individual product 101. Therefore, the progress management No. can be used as a key in the reference/retrieval of a database. As described above, since the RF-ID tag 230 is reused, the same RF-ID tag ID can correspond to a plurality of different products. However, that does not apply to the progress management No.

Item 3 line plan No. indicates in what order number the product 101 is inputted in a specific production line.

Item 4 contract model indicates the model of the completed product 101 in the market.

Item 5 model code is used inside a plant and corresponds to item 4 contract model one to one.

Item 6 machine number is a serial number attached to the product 101. This number does not always correspond to that of the item 3.

Item 7 full option code is the code of the option of the basic component of the product 101. For example, if the product 101 is a personal computer (PC), the respective capacity of memory and a hard disk, the type of a CPU and the like are encoded.

Item 8 package pattern code is the code of the type of a case by which the product 101 is packed or one of accessories attached to the product 101.

Item 9 free flag is used to indicate whether the product 101 is shipped.

Item 10 quantity indicates the production quantity of a lot to which the product 101 belongs.

The third group is composed of items 11-40 and indicates the progress of the product 101 to which the RF-ID tag 230 is related. Although the third group includes 30 items, they are classified into ten meaning sets of three items each. Each set corresponds to one process and one set of data is written into the product 101 every process. Although in Fig. 6, the RF-ID tag 230 can store total ten sets of data, the number of sets to be recorded is variable according to the storage capacity of the RF-ID tag 230. Only the first set composed of the items 11-14 is described below.

Item 11 person-in-charge ID1 is the ID of an operator in charge of a process corresponding to the first set. For example, as this ID, the RF-ID control unit 201 corresponding to a process taken charge by the operator in charge can read its ID card at the starting time of business and stores it the work area of the storage unit 208. The input method of the person-in-charge ID is arbitrary.

Item 12 process ID1 identifies a process corresponding to the first set. For example, in Fig. 4, since the RF-ID control units 201A-201C are provided for each process, the IDs of the RF-ID control units 201A-201C can be used. Alternatively, since in Fig. 6, an ID for each process managed by the database, which is not shown, can also be used.

Item 13 elapsing time 1 is data composed of the starting and completion dates of a process corresponding to the first set("date" used in a phrase "starting and completion dates" or the like hereinafter implies "date and time"). How the starting and completion dates of a process can be obtained is described later.

Next, the configuration (item list 302) of a table provided for the ID management system 108 is described. In that table, one record corresponds to one product.

Item 1 RF-ID tag ID and item 2 progress management No. correspond to the items 1 and 2 of the item list 301. The progress management No. is also called "order ID".

Item 3 flag in use indicates whether a product 101 corresponding to the record is shipped (the same as the item 9 stored in the RF-ID tag 230).

Item 4 registration date and item 5 update date are the dates of registration and update, respectively, of the record.

Since as described above, the RF-ID tag ID can be repeatedly used, there is a possibility that it is used for another product 101. Therefore, in this table provided for the ID management system 108, a unique key for each record is item 2 progress management No. However, when the ID management system 108 is referenced (retrieved) about the product 101 under the production process of the product 101, the RF-ID tag ID can also be used as a key. This is because a record corresponding to the product 101 can be uniquely specified by limiting the flag in use to a record before shipment and retrieving data from it if the RF-ID tag 230 is reused after shipping the product 101 in the production process.

Each record of this table can also be registered when a product (more precisely, its component and raw material) corresponding to the record is inputted to the production line (that is, at the starting time of the first process). By registering a record in this table, the correspondence between its RF-ID tag ID and progress management No. can be managed. Alternatively, the items 2-10 of the item list 301 can be written into the RF-ID tag 230 together at the time of the registration of the record.

Next, the configuration of the progress data (item list 303) stored in the buffer area of information stored in the storage unit 208 of the RF-ID control unit 201 is described. The buffer area is an area for storing a queue composed of the progress data to be written into the process management system 110.

Item 1 RF-ID tag ID corresponds to the item 1 of the item list 301 and is used as a key for generating its progress data. Each of item 2 person-in-charge ID, item 3 process ID and item 4 elapsing time correspond to any set of the third group of the item list 301.

Item 3 process ID can be omitted. Because all item 3 process IDs, stored in one RF-ID control unit are the same since one RF-ID control unit 201 corresponds to one process. Therefore, one set of data composed of the items 1, 2 and 4 can be stored in the buffer area of the storage unit 208 and the process ID can be included when they are transmitted to the process management system 110.

Next, the configuration of a table for indicating basic production instructing information (item list 304) of two tables provided for the process management system 110 is described. The item list 304 indicates basic information about a product 101 to which the RF-ID tag 230 is related like the second group (items 2-10) of the item list 301. In this table for indicating basic production instructing information, one record corresponds to one product 101.

Item 1 progress management No. is the same as the item 2 of the item list 301. Item 2 model ID is the same as the item 5 (model code) of the item list 301 although their descriptions are different.

Item 3 product classification indicates classification, such as a PC for enterprises, a PC for mass merchandisers, if the product 101 is, for example, a PC.

Item 4 parent lot ID is used when a specific lot is divided and produced. For example, a plan in which a lot of 100 products 101 is initially to be produced is sometimes changed and they are produced in two lots of 30 products and 70 ones. In that case, the parent lot of 30 products is the lot of 100 products. It is assumed that such parenthood between lots and the ID of each lot are managed by another database, which is not shown in Fig. 6.

Item 5 version number of model indicates the level (version) of item 2 model ID. For example, the version of the entire product 101 is updated by the version-up of a part of its components, constituting the product 101 and its version-up is reflected in the version number of model.

Item 6 model is the same as the item 4 (contract model) of the item list 301 although their descriptions are different.

Item 8 repair classification and item 9 the frequency of repairs are a classification and number of times for managing repairs caused under the production process of the product 101. The frequency of F repairs (F represents field) indicates the frequency of repairs caused after shipment.

Item 11 registration date is the registration date of a record. The record of this table can be, for example, registered when a product corresponding to the record (more precisely, its component and raw material) is inputted to a production line.

Item 12 input date, item 13 input time, item 14 completion date, item 15 shipping date and item 16 scheduled shipping date are the date a product 101 corresponding to the record is inputted to the production line, the input time of the product 101, its production completion date, its shipping date and its scheduled shipping date, respectively. The RF-ID control unit 201 can record these items in each corresponding process. Alternatively, if the RF-ID control unit 201 is installed only in the production process and is not installed in the shipping process, the shipping date can be recorded by another means (for example, in relation with a shipping management system, which is not shown in Fig. 6.

Item 17 container ID is the same as the item 3 (line plan No.) of the item list 301, although their descriptions are different.

Item 18 pattern progress No. is a number corresponding to item 1 progress management No. and is used for the convenience' sake of management.

Item 19 full OP code is the same as the item 7 (full option code) of the item list 301.

The items 20-30 are various information determined for each lot. Item 20 serial number is a lot number. It is provided for statistics for each lot. Item 21 assembly instructing No. is uniquely determined for each lot. Item 22 total number of versions and item 30 version number are almost the same as item 5 version number of model. Item 23 number of inputs and item 24 quantity relates to the production quantity of a lot to which a product 101 corresponding to the record belongs. If there is the division described with reference to the item 4, the items 24 and 23 are the production quantity of a parent lot and that of a divided child lot, respectively. Item 25 WO_NUM (assembly instruction), item 26 WO_LNLE (assembly instruction), item 27 Q No. (queue number), item 28 assembly serial number and item 29 basic component model ID all are management information about a lot.

Item 31 the last rack registration ID, item 32 the last rack number and item 33 the version number of last rack number are used to manage the correspondence between a rack and a product 101 when the product 101 is mounted on a rack and is moved in the middle of the production line.

Item 34 option code indicates special accessories further added to the basic components (indicated by the item 19 full OP code of the) of a product 101.

Next, the configuration of a table indicating production progress information (item list 305) of the two tables provided for the process management system 110 is described. The item list 305 indicates the progress of a product 101 to which the RF-ID tag 230 is related like each set constituting the third group of the item list 301. One record is added to this table every time one product 101 proceeds to one process.

Item I progress management No. is the same as the item 2 of the item list 301.

Item 2 history ID is automatically assigned to a record when the record is added the table and id unique for each record.

Item 4 process flow ID corresponds to the item 12 (process ID1) and the like of the item list 301. Item 3 work state is the description of a process corresponding to the process flow ID. The correspondence between the process flow ID and the work state is managed by another database, which is not shown in Fig. 6.

Item 5 express classification indicates how speedily the product 101 must be manufactured.

Item 6 top configuration ID and item 7 the version number of a top configuration are reserved for future use.

Item 8 type flag indicates the type of a process corresponding to the record (for example, the type of a "component assembly process", a "test process" and the like).

Item 9 operator corresponds to the item 11 (person-in-charge ID1) and the like of the item list 301.

Item 10 event process flow ID and item 11 history classification are provided for the managerial reason.

Item 12 event date corresponds to the item 31 (elapsing time 1) of the item list 301 and the like.

Item 13 facilities and item 14 facility slot No. relates to facilities used in a process corresponding to the record. Item 15 line indicates a production line to which a process corresponding to the record belongs.

Item 16 terminal ID of the is the ID of a computer terminal mounting the RF-ID control unit 201 provided for a process corresponding to the record.

The event monthly date is only the year/month/day data of item 12 event date.

Next, the configuration of a table (item list 306) provided for the test system 111 is described. In this table, one record corresponds to one product 101.

Item 1 progress management No. is also called order No. and is the same as the item 2 of the item list 301. The progress management No. is also a key for uniquely identifying a record in this table.

Item 2 contract model and item 3 model code correspond to the items 4 and 5 of the item list 301, respectively.

Item 4 generation indicates generation, such as "2006 spring model" if the product 101 is a PC.

Item 5 classification is the same as the item 3 product classification of the item list 304.

Item 6 test module No. identifies a test program module to be applied to a product 101 corresponding to the record. Item 7 version number is the version number of the program module. Item 8 application date is a date the program module of the version number is released.

Next, the operation of the system is described using the process B shown in Fig. 4 as an example.

The antenna 202B always monitors whether there is an RF-ID tag in the communication range. When the product 101 is transported from the process A to the process B, the RF-ID tag 230B enters the communication range of the antenna 202B. Then, the antenna 202B reads an RF-ID tag ID (the item 1 of the item list 301) from the RF-ID tag 230B and detects the existence of the RF-ID tag 230B.

The RF-ID control unit 201B relates a date the existence of the RF-ID tag 230B is detected to the read RF-ID tag ID and stores it in the work area of the storage unit 208 as the application starting date of the process B to the product 101.

In this preferred embodiment as shown in Fig. 4, the storage unit 208 comprises a work area and a buffer area. The buffer area is used to store a queue composed of data to be transmitted to the process management system 110 and the work area is used for us other than it.

The operator B applies the process B (assembly, processing and the like of a component) to the product 101. When the process is completed, the operator B notifies the RF-ID control unit 201B of the process completion. For example, this notification is performed by the operator B pushing a prescribed button provided for a computer terminal comprising the RF-ID control unit 201B, which is not shown in Fig. 4. Depending on a preferred embodiment, the RF-ID control unit 201B can also automatically detect the process completion. As one of the automatic detection methods, the time the RF-ID tag 230B goes out of the communication range of the antenna 202B can be detected.

After detecting the process completion, the RF-ID control unit 201B relates the detected date to the RF-ID tag ID read from the RF-ID tag 230B and stores it in the work area of the storage unit 208 as its process completion date.

Then, the RF-ID control unit 201B performs a progress data write process.

Specifically, at this time point, the RF-ID control unit 201B determines whether to perform a progress data write process, using a network and operates according to the determination. In the following description, an operation mode using a network and an operation mode not using a network are called "network mode" and "non-network mode", respectively.

Conventionally, a process corresponding to the network mode in this preferred embodiment is not performed. Therefore, when the network, the process management system 110 or the like fails for a long time, the buffer 112 overflows or the entire production line must be stopped in order to prevent the overflow. However, in this preferred embodiment, the non-network mode is provided in order to avoid such overflow and the stoppage of the entire production line.

The progress data comprises an ID for identifying a process, an ID for identifying an operator, a process starting date and a process completion date. For example, the progress data written into the RF-ID tag 230 is a set of the person-in-charge ID 1, the process ID1 and the elapsing time 1 (see the item list 301). However, the progress data transmitted from the RF-ID control unit 201 to the process management system 110 is obtained by further adding the progress management No. to it.

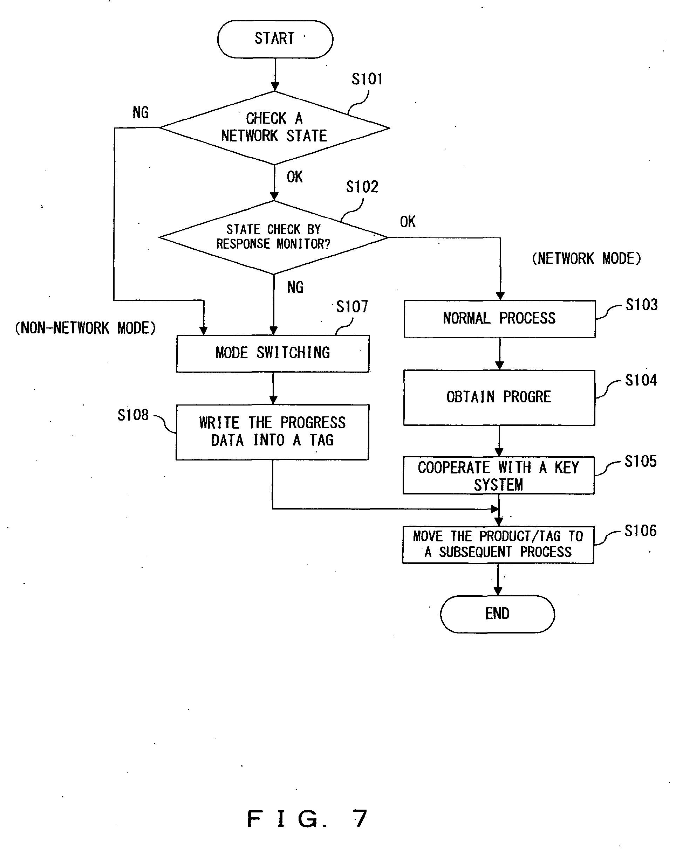

Here, the progress data write process and its related operation mode switching are mainly described with reference to Fig. 7. Although in the following description, the RF-ID control unit 201B in the process B shown in Fig. 4 is described as an example, the same applies to the RF-ID control units 201A and 201C. In the following description, Figs. 5 and 6 are referenced from time to time for the components of the RF-ID control unit 201B and used data, respectively.

The flowchart shown in Fig. 7 shows that the non-network mode is selected when at least one of determinations in steps S101 and S102 is "NG" and that when both determination in steps S101 and S102 are "OK", the network mode is selected. The operation shown in Fig. 7 is also typically shown in the balloon called "control function" on the left side of Fig. 4. The process corresponding to the flowchart shown in Fig. 7 is performed using the start or end of the process as a trigger as an example.

Firstly, in step S101, the RF-ID control unit 201B checks the state of a network. The "network state" checked in step S101 is the load state of the entire network. The load state is indicated by the amount of load. More specifically, in step S 101, the RF-ID control unit 201 detects the value of "dangerous status flag" managed by the LAN monitor device 210.

The LAN monitor device 210 always monitors the load state of the network. The network to be monitored is an in-plant LAN and corresponds to the key network shown in Fig. 5. The LAN monitor device 210 compares a load state with a predetermined reference. If the load is equal to or higher than the reference, the value of the dangerous status flag is set to a value indicating "danger". If not, it is set to a value indicating "safe".

Since the value appropriate as such a reference varies depending on the environment, for example, it is preferable for the system manager to set it in the LAN monitor device 210 on the basis of its experiences. For example, if the load state is indicated by one parameter about the amount of load, one threshold can be made the reference. Alternatively, if the load state is indicated by a plurality of parameters, the relationship among a plurality of thresholds or parameters or the like can be used as the reference. In either case, it is preferable to set a reference that "when the load becomes equal to or higher than the reference, the possibility that the speed of a process using communication via a network may decrease up to a level where the operation of a plant is disturbed becomes high". Whether it is a level where the operation of a plant is disturbed can also be determined by comparing it with a prescribed threshold.

There are various methods in which the RF-ID control unit 201B detects the value of the dangerous status flag depending on a preferred embodiment. For example, the RF-ID control unit 201B can inquire the LAN monitor device 210 about the value of the dangerous status flag via the network. Alternatively, the LAN monitor device 210 can regularly notify each of the RF-ID control units 201A-201C of the value of the dangerous status flag via the network.

If the connection between the RF-ID control unit 201 and the LAN monitor device 210 is down when the value of the dangerous status flag is detected via the network thus, the value cannot be detected. However, by locating the LAN monitor device 210 and the RF-ID control unit 201 as near as possible each other on the network, the frequency of such an accident can be fairly reduced.

More specifically, for example, if the RF-ID control unit 201 is installed as a part of a computer terminal, an LAN monitor device function can also be provided for a nearby switching hub directly connected to the computer terminal by a cable and the switching hub can also be used as the LAN monitor device 210.

Generally a network is hierarchical and one in-plant network often comprises a plurality of network segments. For example, In Fig. 5, the upper and lower sections of the key network separated by a thick line can be different segments. In that case, the LAN monitor device 210 monitors the load states of both the inside (key network below the line) and outside (key network above the line) of a segment to which it belongs and sets the value of the dangerous status flag on the basis of both the load states.

When a nearby switching hub is used as the LAN monitor device 210 as described above, the communication between the RF-ID control unit 201 and the LAN monitor device 210 hardly becomes available as long as a hardware failure does not occur in either a network cable or the network interface card (NIC) of a computer mounting the RF-ID control unit 201. Therefore, if the value of the dangerous status flag is detected via the network, there in no trouble in the actual operation (if the cable or the NIC fails, there is no trouble since determination in step S102, which is described later, becomes "NG").

The location of the LAN monitor device 210 on the network can vary depending on a preferred embodiment. Therefore, depending on the location, the RF-ID control unit 201B can determine it according to a rule that "if the value of the dangerous status flag cannot be detected, it is regarded that the value of the dangerous status flag is dangerous" or the like.

Thus the RF-ID control unit 201B detects the value of the dangerous status flag. If the value indicates safety, the determination in step S101 becomes "OK" and the process proceeds to step S102. If the value of the dangerous status flag indicates danger, the determination in step S101 becomes "NG" and the process proceeds to step S 107.

In step S102, the RF-ID control unit 201B checks the state of the network. However, the "network state" checked here is different from one checked by another type of information in step S101. More specifically, it is one indicated by information obtained by a response monitor function provided for the response monitor unit 203 in the RF-ID control unit 201B.

The response monitor function monitors a response time needed to communicate with a management system via the network and outputs an alarm when its average exceeds a prescribed threshold.

The monitor target in some preferred embodiment is communication with the ID management system 108. As described later, the RF-ID control unit 201B refers to the ID management system 108 via the network, using the RF-ID tag ID (item 1 of the item list 301) read from the RF-ID tag 230B as a key and obtains a progress management No. (item 2 of the item list 302) corresponding to the RF-ID tag ID. The response time in this case is a time until the progress management No. is received after the RF-ID tag ID is transmitted.

The response monitor unit 203 monitors a response time independently of the flow shown in Fig. 7 and calculates the average response time of nearby n times (n(1). Then, the response monitor unit 203 compares the average with the prescribed threshold and outputs an alarm to the determination control unit 204 if the average is equal to or more than the threshold. As the average calculation method, an appropriate method, such as the arithmetical mean, the weighted mean or the like, can be selected. Since an appropriate value as the threshold varies depending on a preferred embodiment, for example, it is preferable for the system manager to set it appropriately.

In another preferred embodiment, the monitor target can be both communication with the ID management system 108 and one with the process management system 110. In this case, the response monitor unit 203 calculates an average on the basis of a time needed to refer to the ID management system 108 nearby n times (n(1) and a time needed to update the process management system 110 nearby m times (m(1).

In step S102, the determination control unit 204 determines whether the response monitor unit 203 currently issues an alarm. If an alarm is issued, determination in step S102 becomes "NG", the process proceeds to step S107. If an alarm is not issued, determination in step S102 becomes "OK", the process proceeds to step S 103.

Steps S103-S106 are performed when both determinations in steps S101 and S102 are "OK", and indicates a state where the network mode operation is selected. The network mode corresponds to when the process can be performed using the network without any trouble since the network load is not so high and communication is available in various management systems.

Firstly, in step S103, the determination control unit 204 determines to select the network mode as the operation mode. Specifically, the determination control unit 204 determines to perform a normal process for when there is no special failure in the network. According to this determination, the switching control unit 207 transmits a control signal to the DB reference/update control unit 205 to activate it. Then, the process proceeds to step S 104.

In step S104, upon receipt of the control signal, the DB reference/update control unit 205 obtains progress data using the ID management system 108. For that purpose, the DB reference/update control unit 205 refers to the ID management system 108 via the network, using the already read RF-ID tag ID (item 1 of the item list 301) as a key to obtain progress management No. (item 2 of the item list 302).

This progress data comprises the obtained progress management No. and information already stored in the storage unit 208 (an ID for identifying the process B, an ID for identifying the operator 90B, the starting date of the process B and the completion date of the process B). Therefore, by obtaining a progress management No. and combining information already stored in the storage unit 208 with the progress management No., the entire progress data can be obtained. After the acquisition of the progress data, the process proceeds to step S105.

In step S105, the DB reference/update control unit 205 is jointed with the key system. More specifically, the progress data is transmitted to the process management system 110 which is a part of the key system in this preferred embodiment. However, this "process of transmitting progress data to the process management system 110" does not mean to immediately transmit it via a network in this stage and means to store progress data in the buffer area of the storage unit 208 in order to transmit it later. When the progress data is stored in the buffer area, the process proceeds to step S106 without waiting for the transmission of the progress data to the process management system 110.

In step S106, the product 101B and the RF-ID tag 230B are moved to a subsequent process (process C in this example) and the series of processes are terminated.

In step S 105, the DB reference/update control unit 205 transmits the progress data stored in the buffer area of the storage unit 208 in step S105 to the process management system 110 via the network in the stored order from time to time. This is transmitted in the background independently of the flow shown in Fig. 7. Since the progress data is transmitted in the stored order of the buffer area, it can be said that the progress data in the buffer area can be managed as the component of a queue.

Steps S106, S107 and S108 are performed when one of the determinations in steps S101 and S102 is "NG", and indicates the selection of the non-network mode. The non-network mode is an operation mode corresponding to when there is a failure in the network, such as when the entire network is in the high load state, when communication with a management system takes too much time or the like.

Firstly, in step S107 the determination control unit 204 determines to select the non-network mode as the operation mode. According to this determination, the switching control unit 207 transmits a control signal to the RF-ID tag read/write control unit 206 to activate it. Then, the process proceeds to step S108.

In step S108, upon receipt of the control signal, the RF-ID tag read/write control unit 206 writes the progress data into the memory, which is not shown in Fig. 4, of the RF-1D tag 230B via the antenna 202B. More specifically, this progress data corresponds to one set of data in the third group (items 11-40) of the item list 301 shown in Fig. 6. Whether the progress data is written in what order number of the item list 301 depends on the amount of the progress data already written in one before the current process.

For example, if the network fails for a long time, the RF-ID control unit 201A may have already written the progress data of the process A into the RF-ID tag 230A at the time point where the product 101 is in the process A. Specifically, the progress data of the process A may have been written in the items 11-13 of the RF-ID tag 230B. In this case, the RF-ID tag read/write control unit 206 writes the progress data of the process B in the RF-ID tag 230B as item 14 person-in-charge ID2, item 15 process ID2 and item 16elapsing time 2 in the process B.

Conversely, the network sometimes fails while applying the process B to the product 101. In that case, since the RF-ID control unit 201A has already transmitted the progress data of the process A to the process management system 110 via the network, the progress data of the process A is not written in the RF-ID tag 230B. Therefore, in the process B, the RF-ID tag read/write control unit 206 writes the progress data of the process B in the RF-ID tag 230B as item 11 person-in-charge ID1, item 12 process ID1 and item 13 elapsing time 1.

After in step S108, the progress data is written into the RF-ID tag 230B thus, the process proceeds to step S 106.

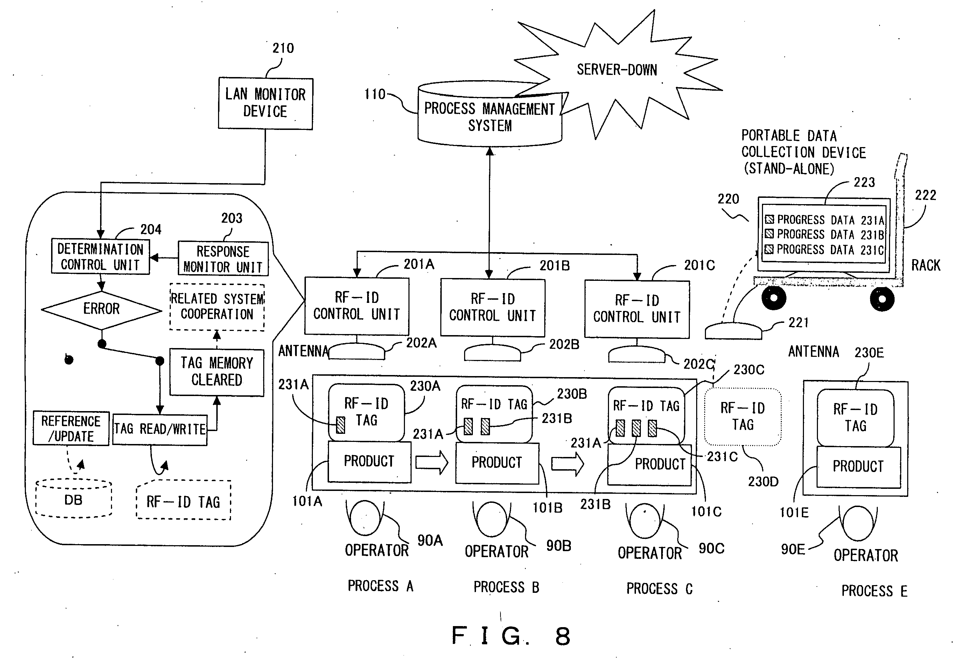

Although so far the switching of the operation mode has been described with reference to Fig. 7, next, the case where the network continues to fail is described with reference to Fig. 8.

Fig. 8 shows the case where the network continues to fail while the product 101 sequentially moves to the processes A-C. More specifically, during this period, the process management system 110 is down and the state where there is no response even if the process management system 110 is accessed continues. Specifically, Fig. 8 shows the case where a state where the process management system 110 returns no ACK of update completion continues.

Fig. 8 can be obtained by modifying a part of Fig. 4, and the description of the points common to Fig. 4 is omitted here. Fig. 8 shows only the process management system 110 of the management systems.

In the process A, the RF-ID control unit 201A operates according to the flowchart shown in Fig. 7 and determines to select the non-network mode since there is a failure in the network. Then, in step S108, the RF-ID control unit 201 A writes progress data 231 A into the RF-ID tag 230A via the antenna 202A. Then, in step S 106, the product 101A and the RF-ID tag 230A are transported to the process B.

In the process B, the RF-ID control unit 201 B operates according to the flowchart shown in Fig. 7 and determines to select the non-network mode. Then, in step S108, the RF-ID control unit 201B writes progress data 231 B into the RF-ID tag 230B. Then, in step S106, the product 101B and the RF-ID tag 230B are transported to the process C.

In the process C, the RF-ID control unit 201C operates according to the flowchart shown in Fig. 7 and determines to select the non-network mode. Then, in step S108, the RF-ID control unit 201C writes progress data 231C into the RF-ID tag 230C.

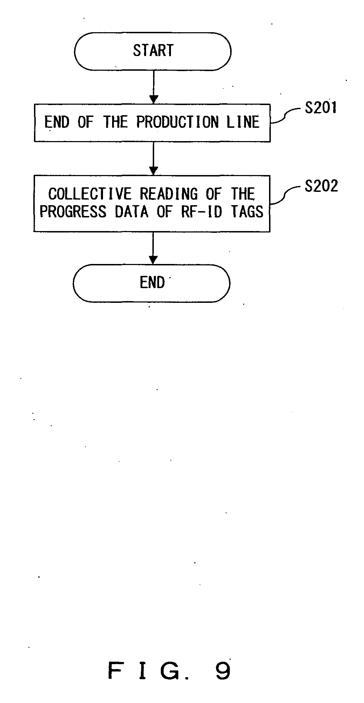

Then, since the process C is the last process of the production line shown in Fig. 8, the data collection device 220 reads the progress data 231A-231C written in the RF-ID tag 230. Data is read using the antenna 221 connected to the data collection device 220 and the progress data 231A-231C read from the RF-ID tag 230 is stored in the storage unit 223 of the data collection device 220. The detailed operation of this data collection device 220 is described later together with Fig. 9.

The data collection device 220 clears the writable memory of the RF-ID tag 230 after reading the progress data from the RF-ID tag 230. In Fig. 8, the memory-cleared state of the RF-ID tag 230 is indicated by "230D".

In Fig. 8, it is assumed that a plurality of production lines is needed to complete the product 101. Therefore, after the completion of the production line composed of the processes A-C, corresponding products 101 and RF-ID tag 230 are transported to another production line including a process E and some process is further performed. In Fig. 8, the data collection device 220 reads the progress data 231A-231C from the RF-ID tag 230 between the production lines (that is, at the end of one production line).

If the memory capacity of the RF-ID tag 230 is not large, there is a possibility that the full data of the plurality of processes may not be able to be stored. In such a case, before the product 101 reaches at the end of one production line, the progress data can be read from the RF-ID tag 230 from time to time using the data collection device 220 and the memory of the RF-ID tag 230 can be cleared.

Next, the operation of the data collection device 220 is described with reference to Fig. 9. Although Fig. 8 shows a plurality of RF-ID control units 201A-201C, the data collection device 220 performs the operation shown in Fig. 9 after it is determined that at least one of them should be operated in the non-network mode.

In step S201, the data collection device 220 moves to the end of the production line. In this case, human being can carry the data collection device 220. If the rack 222 is provided with an automatic running function, the data collection device 220 can also automatically be run up to the end of the production line. In Fig. 8, the data collection device 220 is located on the right side of the process C.

Then, in step S202, the data collection device 220 collectively reads progress data from RF-ID tag 230 corresponding to each of all the products 101 transported up to the end of the production line, using the antenna 221. In Fig. 8, progress data 231A-231C is collectively read from the RF-ID tag 230. The read data is stored in the storage unit 223 of the data collection device 220. In this case, data to be read is the items (items 11-40) of the third group on the item list 301 shown in Fig. 6. In order to catch later to which product 101 the progress data corresponds, data is first read from at least either item 1 RF-ID tag ID or item 2 progress management No.

Following the process in step S202, the data collection device 220 deletes the read data from the RF-ID tag 230, using the antenna 221. The RF-ID tag 230 shown in Fig. 8 shows the state where progress data is deleted thus (state where all the items 11-40 of the item list 301 shown in Fig. 6 in the memory are cleared). This data deletion corresponds to the balloon "the memory clearance of tag" on the left side of Fig. 8.

After the data deletion, the process shown in Fig. 9 is terminated. After the network and the management system are recovered to the normal state, the process management system 110 reads data stored in the storage unit 223 (which corresponds to the balloon "cooperation with a related system" on the left side of Fig. 8). Since the network restoration sometimes takes approximately several days, it is preferable for the storage unit 223 to be a storage device in which data is not lost, such as non-volatile semiconductor memory, a hard disk or the like. Since there is a possibility that a lot of data may be read from many RF-ID tags 230, the capacity of the storage unit 223 must be fairly large.

For example, if the data collection device 220 is realized by a general-purpose computer, the storage unit can be an external hard disk. In that case, by removing the storage unit 223 from the data collection device 220 and connecting it to a server realizing the process management system 110, the process management system 110 can easily read the progress data in the storage unit 223.

Then, the process management system 110 writes the read progress data into a database (which corresponds to the item list 305 shown in Fig. 6).

The present invention is not limited to the above-described preferred embodiment and its various variations are possible. Such several examples are described below.

The first aspect of the variation relates to data duplication. In the above-described example, progress data is not written into the RF-ID tag 230 in the case of the network mode. However, in order to record progress data more surely, data can also be duplicated by writing progress data into the RF-ID tag 230 even in the case of the network mode, using the memory of the RF-ID tag 230.

Specifically, in the case of the network mode, progress data can also be written into both the RF-ID tag 230 and the process management system 110, and in the non-network mode, progress data can also be written into only the RF-ID tag 230.

In this case, in the case of the network mode, the switching control unit 207 shown in Fig. 5 transmits a control signal to both the DB reference/update control unit 205 and the RF-ID tag read/write control unit 206 to activate them. The operation in this case can be obtained by moving the flowchart shown in Fig. 7 from step S 105 to step S 108 (instead of step S 106).

The second aspect of the variation relates to the correspondence of the RF-ID control unit 201 and the antenna 202. In Figs. 4 and 8, a process is related to the RF-ID control unit and the antenna 202 one to one. However, as long as a process is related to the antenna 202 one to one, the process can also be related to the RF-ID control unit 201 N to one.

For example, in Fig. 4, one RF-ID control unit 201 can also be provided between the work place of the process A and that of the process B, instead of two RF-ID control units 201A and 201B and two antennas 202A and 202B can also be connected to the RF-ID control unit 201.

In this case, the RF-ID control unit 201 controls both the processes A and B.

For example, the response monitor unit 203 shown in Fig. 5 can also manage the processes A and B separately, calculate each average response time and independently output an alarm. Alternatively, the response monitor unit 203 can calculate one average without discriminating the processes A and B each other and output an alarm.

The RF-ID tag read/write control unit 206 must appropriately switch which antenna should be controlled, 202A or 202B. The antennas 202A and 202B and the RF-ID tag read/write control unit 206 must be configured in such a way as to discriminate which antenna detects the existence of the RF-ID tag 230, 202A and 202B.

Furthermore, the storage unit 208 must separate an area for the process A and one for the process B, as requested and record data in relation with the process ID.

In this case, although the identification information of the RF-ID control unit 201 cannot be used for the process ID, the identification information of the antenna 202 can be used. Alternatively, the process ID can be related to the identification information of the antenna 202 one to one and be managed.

The fourth aspect of the present invention can be obtained by catching the present invention in the viewpoint of the operation of a computer mounting a process and a RF-ID control unit 201 in the case where the process is related to the RF-ID control unit 201 N to one.

The third aspect of the variation relates to the data collection device 220. One system can comprise a plurality of data collection devices 220. Alternatively, the data collection devices 220 can be connected to the RF-ID control unit 201. In such a configuration, the data collection devices 220 can go round each process, read data stored in the buffer of the storage unit 208 of the RF-ID control unit 201, store it in the storage unit 223 and erase the read data from the storage unit 208 of the RF-ID control unit 201. In that case, the process management system 110 reads the data stored in the storage unit 223. Thus, the probability that the storage unit 208 may overflow decreases, thereby effectively using the data collection devices 220 without wasting the data collection devices 220.

If data is duplicated in this configuration (see the first aspect), the same data may be read into the data collection device 220 from each of the RF-ID tag 230 and the storage unit 208. In this case, either the process management system or the data collection device 220 must check the duplication of data.

A place where the data collection device 220 reads progress data from the RF-ID tag 230 can be appropriately determined according to a preferred embodiment. For example, if it is assumed that a specific product is produced by 25 processes, there is one production line comprising all the 25 processes and the RF-ID tag 230 is as shown on the item list 306 shown in Fig. 6, the system can be configured in such a way that progress data may be read not only at the end of the production line as shown in Fig. 9, for example, but also at three places of the respective ends of the tenth, the 20th and the 25th processes the data collection device 220 may read progress data, and the memory of the RF-ID tag 230 may be cleared.

The fourth aspect of the variation relates to a condition under which the network and non-network modes are switched. In the flowchart shown in Fig. 7, when at least one of determinations in steps S101 and S102 is "NG", the determination control unit 204 determines to select the non-network mode. However, it can also be determined to select the non-network mode only if both determinations in the steps are "NG", and the network mode should be selected otherwise. Alternatively, the RF-ID control unit 201 can be operated according to the flowchart in which one of the steps S101 and S102 is deleted (if in step S101 the determination is "OK" when it is determined that step S102 is deleted, the process proceeds to step S103).

However, in order to reduce the possibility that the buffer area of the storage unit 208 may overflow, it is preferable to determine to select the non-network mode if at least one of the determinations in steps S101 and S102 is "NG", as shown in Fig. 7.

As clear from the fourth aspect, the features of the present invention is to switch between the network and non-network modes according to information indicating the state of a network in some meaning, and what the information( which is called network state information) is more specially is various depending on a preferred embodiment. Specifically, the network state information can be any of a load state (the amount of load) monitored by the LAN monitor device 210, a dangerous status flag set by the LAN monitor device 210 according to the load state, a response time monitored by the response monitor device 203, an average time calculated from the response time by the response monitor device 203, an alarm outputted by the response monitor device 203 and their arbitrary combination. Furthermore, another type of information can also be used for the network state information.

The values of the response time and its average increase (that is, deteriorate) if for example, a server realizing the process management system fails although a network does not fail. Therefore, it apparently looks peculiar to handle the response time and its average as "network information indicating the state of a network". However, the response time is a time needed to communicate via a network, and is a time which varies due to a network or the opposite side of the network if it is viewed from the RF-ID control unit 201.

In order to detect the cause of the deterioration of the response time as an actual problem, for example, the operator must perform some operation (which sometimes takes a long time). In this case it is determined due to which the response time deteriorates, the failure of a network, the failure of a server or both of them. In other words, the cause of the deterioration of the response time cannot be determined by the monitor contents of the response monitor device 203.

Therefore, the response time and its average are information about a network in some meaning and it is appropriate to handle these as network state information. In other words, the response monitor device 203 and the LAN monitor device 210 are two different exact examples of a network monitor unit for monitoring the state of a network and outputting network state information.

The fifth aspect of the variation relates to the replacement of a processing order. For example, in Fig. 7, the order of steps S101 and S102 can be replaced. In the case of the network mode, although in step S106 the flow moves to a subsequent process after in step S104 a progress management No. is obtained and in step S105 the progress data is stored in the storage unit 208, steps S104 and S105 can also be performed after step S106.

As described above, when for example, the process B is focused, the antenna 202B detects the existence of the RF-ID tag 230 when the product 101B is transported to the process B to read its RF-ID tag ID. If the read RF-ID tag ID is stored in the storage unit 208 at that time point, step S 106 can be performed immediately after step S 103 and then steps S 104 and S 105 can be performed. This is because step S104 can be performed using the RF-ID tag ID as a key even when the product 101 and the RF-ID tag 230 are transported to a subsequent process C.

The sixth aspect of the variation relates to data items to be used. The data structure shown in Fig. 6 simply shows an example.

For example, the progress data does not always need information for identifying an operator, a process starting date and a process completion date depending on a preferred embodiment. For example, if it is sufficient to manage only whether each process is performed, the progress data to be written into the RF-ID tag 230 is only the process ID. Conversely, the progress data can comprise items other than the above-described items.

In other words, data to be transmitted to the process management system 110 in the network mode and to be written in the RF-ID tag 230 in the non-network mode indicates some information (called "additional information") corresponding to a focused process. The progress data is one example of data indicating such additional information. The data structure of the progress information itself varies depending on a preferred embodiment as described above. In other words, the sixth aspect indicates that the specific structure of data indicating additional information is arbitrary.

Since in the above description it is assumed that the RF-ID tag 230 is reused, both the RF-ID tag ID and the progress management No. are used. However, if the RF-ID tag 230 is not reused, only the RF-ID tag ID is sufficient (specifically, in this case, the RF-ID tag is also used as a progress management No.).

The seventh aspect of the variation relates to the application target of the present invention. It is clear that the type of a "product" and the contents of a "process" are arbitrary in the above-described embodiments and the present invention is applicable to others than the manufacturing process of products in a plant. The present invention is applicable to the management of a work process having one or more stages.

For example, the product can be an industrial product, such as a machine and an electronic circuit, or food, clothes or the like. As long as an individual product is managed in some units, the product can be fluid or powder (for example, fluid contained in one bottle can be regarded as one product). Alternatively, a plurality of products can be made into a set and the set can be managed as one product. The contents of each process can be any of assembly, processing, inspection, repair, packing, disassembly, separation, transportation or the like.

The work process having one or more stages is not limited to the manufacturing process of a product and it can be inspection, repair, disassembly, separation, transportation or the like. If it is a work process having one or more stages separated from each other, the contents performed in each stage of the work process can be arbitrary. The work target can also be arbitrary as long as it is separated in some units and is managed. If the work process is the manufacturing process of a product, each stage corresponds to each process in the manufacturing process.

## Claims

1. A control device (201, 201A, 201 B, 201 C), which is connectable via a network to a management system (108, 110, 111) and which is connected to a radio communication unit (202, 202A, 202B, 202C), wherein
- the management system (108, 110, 111) is adapted to manage a work process of a product (101, 101A, 101 B, 101C, 101E) corresponding to a radio frequency identification tag (230, 230A, 230B, 230C, 230D, 230E) using identification information stored in the radio frequency identification tag (230, 230A, 230B, 230C, 230D, 230E),
- the radio communication unit (202, 202A, 202B, 202C) is related to one stage of the work process (A, B, C, E) and adapted to read/write information from/into the radio frequency identification tag (230, 230A, 230B, 230C, 230D, 230E) by using radio communication, and
- the control device (201, 201A, 201B, 201 C) comprises a network communication unit for communicating via the network;
**characterized in that** the control device (201, 201A, 201 B, 201 C) further comprises:
- a determination unit (204) for determining that the control device (201, 201A, 201 B, 201 C) should operate in a network mode using the network if the amount of load of the network or the time needed to communicate with the management system (108, 110, 111) via the network is less than a predetermined reference and that the control device (201, 201A, 201 B, 201 C) should operate in a non-network mode not using the network if the amount of the load or the time needed is equal to or more than the predetermined reference; and
- a control unit (204, 205, 206, 207) for controlling the radio communication unit (202, 202A, 202B, 202C) to write additional information (231 A, 231 B, 231 C) corresponding to the stage(A, B, C, E) into the radio frequency identification tag (230, 230A, 230B, 230C, 230D, 230E) when it is determined that the control device (201, 201A, 201 B, 201 C) should operate in the non-network mode and controlling to transmit the additional information (231A, 231 B, 231C) to the management system (108, 110, 111) when it is determined that the control device (201, 201A, 201 B, 201C) should operate in the network mode.

2. The control device (201, 201A, 201 B, 201 C) according to claim 1, wherein the amount of the load is monitored by a load monitor device(21 0).

3. The control device (201, 201A, 201B, 201 C) according to claim 1, further comprising a storage unit(208) for relating the additional information (231A, 231B, 231C) to the identification information and storing them, wherein when it is determined that the control device (201, 201A, 201B, 201 C) should operate in the network mode, the control unit(205) relates the additional information (231A, 231B, 231C) to the identification information and storing them in the storage unit(208), and enabling the network communication unit to transmit the identification information and the additional information (231A, 231 B, 231 C) that are stored in the storage unit(208) to the management system (108, 110, 111) via the network.

4. The control device (201, 201A, 201 B, 201 C) according to claim 3, further comprising a response monitor unit (203) for monitoring the time needed for the network communication unit to communicate with the management system (108, 110, 111).

5. The control device (201, 201A, 201B, 201C) according to claim 4, wherein
- the response monitor unit (203) calculates an average response time on the basis of a time needed to communicate with the management system (108, 110, 111) nearby one or more times and compares the average response time with a predetermined threshold, and
- the time needed on the basis of which the determination unit (204) determines is the average response time.

6. The control device (201, 201A, 201B, 201C) according to claim 1, wherein the additional information (231A, 231 B, 231 C) includes at least one of stage information for identifying a stage (A, B, C, E), a starting date at which a product (101, 101A, 101B, 101C, 101E) corresponding to the radio frequency identification tag (230, 230A, 230B, 230C, 230D, 230E) passes the stage (A, B, C, E) and ending date.

7. The control device (201, 201A, 201B, 201C) according to claim 1, wherein the identification information includes at least one of information for identifying the radio frequency identification tag (230, 230A, 230B, 230C, 230D, 230E) and information for identifying the product (101, 101A, 101B, 101C, 101 E).

8. The control device (201, 201A, 201B, 201C) according to claim 1, wherein when the determination unit(204) determines that the control device (201, 201A, 201B, 201C) should operate in the network mode, the control unit(206) enables the radio communication unit (202, 202A, 202B, 202C) to write the additional information(231A, 231 B, 231 C) into the radio frequency identification tag(230, 230A, 230B, 230C, 230D, 230E).

9. A control system which controls communication between the management system (108,110,111) of claim 1 and a plurality of first radio communication units (202, 202A, 202B, 202C), each of which is the radio communication unit (202, 202A, 202B, 202C) of claim 1,
**characterized in that** the control system comprises:
- the control device (201, 201A, 201B, 201 C) according to any of claims 1 - 8;
- a network state monitor unit (, 210) for monitoring and outputting the amount of the load or the time needed; and
- an information collecting unit (220) provided with a second radio communication unit (221) for reading the identification information and the written additional information (231A, 231 B, 231 C) from the radio frequency identification tag (230, 230A, 230B, 230C, 230D, 230E) by using radio communication, and a first storage unit (223) for storing the read identification information and the additional information (231A, 231 B, 231 C).

10. A method for a computer (201, 201A, 201 B, 201 C) controlling communication between a management system(108, 110, 111) and a plurality of radio communication units (202, 202A, 202B, 202C) via a network, wherein
- the management system (108, 110, 111) manages a work process of a product (101, 101A, 101 B, 101C, 101E) corresponding to a radio frequency identification tag (230, 230A, 230B, 230C, 230D, 230E) using identification information stored in the radio frequency identification tag (230, 230A, 230B, 230C, 230D, 230E),
- each of the plurality of radio communication units (202, 202A, 202B, 202C) is provided in relation to one stage (A, B, C, E) of the work process, and reads/writes information from/into the radio frequency identification tag (230, 230A, 230B, 230C, 230D, 230E) by using radio communication, and
- the method comprises an identification information receiving step of one of the plurality of radio communication units (202, 202A, 202B, 202C) receiving the identification information read from the radio frequency identification tag (230, 230A, 230B, 230C, 230D, 230E) from the radio communication unit (202, 202A, 202B, 202C);
**characterized in that** the method further comprises:
- a determination step (S101, S102) of determining that the computer (201, 201A, 201 B, 201 C) should operate in a non-network mode not using the network if the amount of load of the network or the time needed to communicate with the management system (108, 110, 111) via the network is equal to or more than a predetermined reference and that the computer (201, 201A, 201 B, 201 C) should operate in a network mode using the network if the amount of the load or the time needed is less than the predetermined reference;
- a write instruction issuance step (S108) of issuing an instruction instructing the radio communication unit (202, 202A, 202B, 202C) that reads the identification information in the identification information receiving step to write additional information (231A, 231B, 231 C) corresponding to a stage (A, B, C, E) corresponding to the radio communication unit (202, 202A, 202B, 202C) into the radio frequency identification tag (230, 230A, 230B, 230C, 230D, 230E) when in the determination step (S101, S102) it is determined that the computer (201, 201A, 201 B, 201 C) should operate in the non-network mode; and
- a transmitting control step (S105) of transmitting the additional information (231A, 231B, 231C) to the management system (108, 110, 111) when in the determination step (S101, S102) it is determined that the computer (201, 201A, 201B, 201 C) should operate in the network mode.

11. The method according to claim 10, wherein the transmitting control step (S105) comprises
- a storage step of relating the additional information (231A, 231B, 231 C) to the identification information and storing them; and
- a transmission step of transmitting the identification information and the additional information (231A, 231 B, 231 C) that are stored in the storage unit (208) to the management system (108, 110, 111) via the network.

12. The method according to claim 11, further comprising a response monitor step of monitoring a time needed to communicate with the management system (108,110, 111) in the transmission step.

13. The method according to claim 10, wherein the additional information (231A, 231 B, 231 C) includes at least one of stage information for identifying a stage (A, B, C, E), a starting date at which a product (101, 101A, 101B, 101C, 101E) corresponding to the radio frequency identification tag (230, 230A, 230B, 230C, 230D, 230E) passes the stage (A, B, C, E) and ending date.

14. A computer-readable storage medium on which is recorded a control program for enabling a computer (201, 201A, 201B, 201 C) to control communication between a management system (108, 110, 111) and a plurality of radio communication units (202, 202A, 202B, 202C) via a network according to a method of any of claims 10 -13, wherein
- the management system (108, 110, 111) manages a work process of a product (101, 101A, 101B, 101C, 101E) corresponding to a radio frequency identification tag (230, 230A, 230B, 230C, 230D, 230E) using identification information stored in the radio frequency identification tag (230, 230A, 230B, 230C, 230D, 230E),
- each of the plurality of radio communication units (202, 202A, 202B, 202C) is provided in relation to one stage (A, B, C, E) of the work process, and reads/writes information from/into the radio frequency identification tag (230, 230A, 230B, 230C, 230D, 230E) by using radio communication.

## Patentansprüche

1. Steuervorrichtung (201, 201A, 201B, 201C), die über ein Netzwerk mit einem Verwaltungssystem (108, 110, 111) verbindbar ist, und die mit einer Funkkommunikationseinheit (202, 202A, 202B, 202C) verbunden ist, wobei
- das Verwaltungssystem (108, 110, 111) ausgelegt ist zum Verwalten eines Arbeitsprozesses eines Produkts (101, 10A, 101B, 101C, 101E), das mit einem Funkfrequenzidentifikations-Tag (230, 230A, 230B, 230C, 230D, 230E) zusammenhängt, unter Verwendung einer Identifikationsinformation, die in dem Funkfrequenzidentifikations-Tag (230, 230A, 230B, 230C, 230D, 230E) gespeichert ist,
- die Funkkommunikationseinheit (202, 202A, 202B, 202C) mit einer Stufe des Arbeitsprozesses (A, B, C, E) in Beziehung steht und ausgelegt ist zum Lesen/Schreiben einer Information von/in dem/das Funkfrequenzidentifikations-Tag (230, 230A, 230B, 230C, 230D, 230E) unter Verwendung einer Funkkommunikation, und
- die Steuervorrichtung (201, 201A, 201B, 201C) eine Netzwerkkommunikationseinheit zur Kommunikation über das Netzwerk umfasst;
**dadurch gekennzeichnet, dass** die Steuervorrichtung (201, 201A, 201B, 201C) ferner umfasst:
- eine Bestimmungseinheit (204) zum Bestimmen, dass die Steuervorrichtung (201, 201A, 201B, 201C) in einem Netzwerkmodus arbeiten soll unter Verwendung des Netzwerks, wenn die Größe einer Belastung des Netzwerks oder die Zeit, die zur Kommunikation mit dem Verwaltungssystem (108, 110, 111) über das Netzwerk notwendig ist, geringer als eine vorbestimmte Referenz ist, und dass die Steuervorrichtung (201, 201A, 201B, 201C) in einem Nicht-Netzwerkmodus arbeiten soll, der das Netzwerk nicht verwendet, wenn die Größe der Belastung oder die benötigte Zeit gleich oder größer als die vorbestimmte Referenz ist; und
- eine Steuereinheit (204, 205, 206, 207) zum Steuern der Funkkommunikationseinheit (202, 202A, 202B, 202C) zum Schreiben einer zusätzlichen Information (231A, 231B, 231C), die mit der Stufe (A, B, C, E) zusammenhängt, in das Funkfrequenzidentifikations-Tag (230, 230A, 230B, 230C, 230D, 230E), wenn bestimmt wird, dass die Steuervorrichtung (201, 201A, 201B, 201C) in dem Nicht-Netzwerkmodus arbeiten soll, und zum Steuern zur Übertragung der zusätzlichen Information (231A, 231B, 231C) an das Verwaltungssystem (108, 110, 111), wenn bestimmt wird, dass die Steuervorrichtung (201, 201A, 201B, 201C) in dem Netzwerkmodus arbeiten soll.

2. Steuervorrichtung (201, 201A, 201B, 201C) nach Anspruch 1, wobei die Größe der Belastung durch eine Lastüberwachungsvorrichtung (210) überwacht wird.

3. Steuervorrichtung (201, 201A, 201B, 201C) nach Anspruch 1, ferner mit einer Speichereinheit (208) zum in Beziehung Setzen der zusätzlichen Information (231A, 231B, 231C) mit der Identifikationsinformation und zum Speichern dieser, wobei dann, wenn bestimmt wird, dass die Steuervorrichtung (201, 201A, 201B, 201C) in dem Netzwerkmodus arbeiten soll, die Steuereinheit (205) die zusätzliche Information (231A, 231B, 231C) mit der Identifikationsinformation in Beziehung setzt und diese in der Speichereinheit (208) speichert, und zum Ermöglichen, dass die Netzwerkkommunikationseinheit die Identifikationsinformation und die zusätzliche Information (231A, 231B, 231C), die in der Speichereinheit (208) gespeichert ist, über das Netzwerk an das Verwaltungssystem (108, 110, 111) überträgt.

4. Steuervorrichtung (201, 201A, 201B, 201C) nach Anspruch 3, ferner mit einer Antwortüberwachungseinheit (203) zum Überwachen der Zeit, die für die Netzwerkkommunikationseinheit notwendig ist, um mit dem Verwaltungssystem (108, 110, 111) zu kommunizieren.

5. Steuervorrichtung (201, 201A, 201B, 201C) nach Anspruch 4, wobei
- die Antwortüberwachungseinheit (203) eine gemittelte Antwortzeit auf Grundlage einer Zeit berechnet, die notwendig ist, um mit dem nahegelegenen Verwaltungssystem (108, 110, 111) ein oder mehrere Male zu kommunizieren, und die gemittelte Antwortzeit mit einem vorbestimmten Schwellenwert vergleicht, und wobei
- die benötigte Zeit, auf Grundlage derer die Bestimmungseinheit (204) eine Bestimmung durchführt, die gemittelte Antwortzeit ist.

6. Steuervorrichtung (201, 201A, 201B, 201C) nach Anspruch 1, wobei die zusätzliche Information (231A, 231B, 231C) eine Stufeninformation zum Identifizieren einer Stufe (A, B, C, E) enthält, und/oder ein Startdatum, bei dem ein Produkt (101, 101A, 101B, 101C, 101E), das mit dem Funkfrequenzidentifikations-Tag (230, 230A, 230B, 230C, 230D, 230E) zusammenhängt, die Stufe (A, B, C, E) passiert, und/oder ein Enddatum.

7. Steuervorrichtung (201, 201A, 201B, 201C) nach Anspruch 1, wobei die Identifikationsinformation eine Information zum Identifizieren des Funkfrequenzidentifikations-Tags (230, 230A, 230B, 230C, 230D, 230E) und/oder eine Information zum Identifizieren des Produkts (101, 101A, 101B, 101C, 101E) enthält.

8. Steuervorrichtung (201, 201A, 201B, 201C) nach Anspruch 1, wobei dann, wenn die Bestimmungseinheit (204) bestimmt, dass die Steuervorrichtung (201, 201A, 201B, 201C) in dem Netzwerkmodus arbeiten soll, die Steuereinheit (206) der Funkkommunikationseinheit (202, 202A, 202B, 202C) ermöglicht, die zusätzliche Information (231A, 231B, 231C) in das Funkfrequenzidentifikations-Tag (230, 230A, 230B, 230C, 230D, 230E) zu schreiben.

9. Steuersystem, das eine Kommunikation zwischen dem Verwaltungssystem (108, 110, 111) des Anspruchs 1 mit einer Vielzahl von ersten Funkkommunikationseinheiten (202, 202A, 202B, 202C) steuert, wobei jede davon eine Funkkommunikationseinheit (202, 202A, 202B, 202C) nach Anspruch 1 ist,
**dadurch gekennzeichnet, dass** das Steuersystem umfasst:
- die Steuervorrichtung (201, 201A, 201B, 201C) nach irgendeinem der Ansprüche 1-8;
- eine Netzwerkzustands-Überwachungseinheit (210) zum Überwachen und Ausgeben der Größe der Belastung und der benötigten Zeit; und
- eine Informationssammeleinheit (220), die mit einer zweiten Funkkommunikationseinheit (221) bereitgestellt ist, zum Lesen der Identifikationsinformation und der geschriebenen zusätzlichen Information (231, 231B, 231C) aus dem Funkfrequenzidentifikations-Tag (230, 230A, 230B, 230C, 230D, 230E) unter Verwendung einer Funkkommunikation, und eine erste Speichereinheit (223) zum Speichern der gelesenen Identifikationsinformation und der zusätzlichen Information (231A, 231B, 231C).

10. Verfahren für einen Computer (201, 201A, 201B, 201C), der eine Kommunikation zwischen einem Verwaltungssystem (108, 110, 111) von einer Vielzahl von Funkkommunikationsinformationen (202, 202A, 202B, 202C) über ein Netzwerk steuert, wobei
- das Verwaltungssystem (108, 110, 111) einen Arbeitsprozess eines Produkts (101, 101A, 101B, 101C, 101E) verwaltet, das mit einem Funkfrequenzidentifikations-Tag (230, 230A, 230B, 230C, 230D, 230E) zusammenhängt, unter Verwendung einer Identifikationsinformation, die in dem Funkfrequenzidentifikations-Tag (230, 230A, 230B, 230C, 230D, 230E) gespeichert ist,
- jede der Vielzahl von Funkkommunikationseinheiten (202, 202A, 202B, 202C) in Bezug auf eine Stufe (A, B, C, E) des Arbeitsprozesses bereitgestellt ist, und eine Information von/aus dem Funkfrequenzidentifikations-Tag (230, 230A, 230B, 230C, 230D, 230E) schließt/schreibt, unter Verwendung einer Funkkommunikation, und
- das Verfahren einen Identifikationsinformations-Empfangsschritt umfasst, bei dem eine der Vielzahl von Funkkommunikationseinheiten (202, 202A, 202B, 202C), welche die Identifikationsinformation empfängt, die von dem Funkfrequenzidentifikations-Tag (230, 230A, 230B, 230C, 230D, 230E) von der Funkkommunikationseinheit (202, 202A, 202B, 202C) gelesen wird;
**dadurch gekennzeichnet, dass** das Verfahren ferner umfasst:
- einen Bestimmungsschritt (S101, S102) zum Bestimmen, dass der Computer (201, 201A, 201B, 201C) in einem Nicht-Netzwerkmodus arbeiten soll, indem das Netzwerk nicht verwendet wird, wenn die Größe der Last des Netzwerks oder die Zeit, die zur Kommunikation mit dem Verwaltungssystem (108, 110, 111) über das Netzwerk benötigt wird, gleich oder größer als eine vorbestimmte Referenz ist, und dass der Computer (201, 201A, 201B, 201C) in einem Netzwerkmodus arbeiten soll, unter Verwendung des Netzwerks, wenn die Größe der Last oder die benötigte Zeit geringer als die vorbestimmte Referenz ist;
- einen Schreibanweisungs-Ausgabeschritt (S108) zum Ausgeben einer Anweisung, welche die Funkkommunikationseinheit (202 202A, 202B, 202C), die die Identifikationsinformation in dem Identifikationsinformations-Empfangsschritt liest, anweist, eine zusätzliche Information (231A, 231B, 231C) zu schreiben, die mit einer Stufe (A, B, C, E) zusammenhängt, die mit der Funkkommunikationseinheit (202, 202A, 202B, 202C) zusammenhängt, in das Funkfrequenzidentifikations-Tag (230, 230A, 230B, 230C, 230D, 230E), wenn in dem Bestimmungsschritt (S101, S102) bestimmt wird, dass der Computer (201, 201A, 201B, 201C) in dem Nicht-Netzwerkmodus arbeiten soll; und
- einen Übertragungssteuerschritt (S105) zum Übertragen der zusätzlichen Information (231A, 231B, 231C) an das Verwaltungssystem (108, 110, 111), wenn in dem Bestimmungsschritt (S101, S102) bestimmt wird, dass der Computer (201, 201A, 201B, 201C) in dem Netzwerkmodus arbeiten soll.

11. Verfahren nach Anspruch 10, wobei der Übertragungssteuerschritt (S105) umfasst
- einen Speicherschritt zum in Beziehung Setzen der zusätzlichen Information (231A, 231B, 231C) mit der Identifikationsinformation und zum Speichern dieser; und
- einen Übertragungsschritt zum Übertragen der Identifikationsinformation und der zusätzlichen Information (231A, 231B, 231C), die in der Speichereinheit (208) gespeichert ist, an das Verwaltungssystem (108, 110, 111) über das Netzwerk.

12. Verfahren nach Anspruch 11, ferner mit einem Antwortüberwachungsschritt zum Überwachen einer Zeit, die zur Kommunikation mit dem Verwaltungssystem (108, 110, 111) in dem Übertragungsschritt notwendig ist.

13. Verfahren nach Anspruch 10, wobei die zusätzliche Information (231A, 231B, 231C) eine Stufeninformation zum Identifizieren einer Stufe (A, B, C, E), und/oder ein Startdatum, bei dem ein Produkt (101, 101A, 101B, 101C, 101E), das mit dem Funkfrequenzidentifikations-Tag (230, 230A, 230B, 230C, 230D, 230E) zusammenhängt, die Stufe (A, B, C, E) passiert, und/oder ein Enddatum enthält.

14. Computer-lesbares Speichermedium, auf dem ein Steuerprogramm aufgezeichnet ist, das einem Computer (201, 201A, 201B, 201C) ermöglicht, eine Kommunikation zwischen einem Verwaltungssystem (108, 110, 111) in einer Vielzahl von Funkkommunikationseinheiten (202, 202A, 202B, 202C) über ein Netzwerk gemäß einem Verfahren nach irgendeinem der Ansprüche 10-13 zu steuern, wobei
- das Verwaltungssystem (108, 110, 111) einen Arbeitsprozess eines Produkts (101, 101A, 101B, 101C, 101E) verwaltet, das mit einem Funkfrequenzidentifikations-Tag (230, 230A, 230B, 230C, 230D, 230E) zusammenhängt, unter Verwendung einer Identifikationsinformation, die in dem Funkfrequenzidentifikations-Tag (230, 230A, 230B, 230C, 230D, 230E) gespeichert ist,
- jede der Vielzahl von Funkkommunikationseinheiten (202, 202A, 202B, 202C) in Bezug auf eine Stufe (A, B, C, E) des Arbeitsprozesses bereitgestellt ist, und eine Information aus/in das Funkfrequenzidentifikations-Tag (230, 230A, 230B, 230C, 230D, 230E) liest/schreibt, unter Verwendung einer Funkkommunikation.

## Revendications

1. Dispositif de commande (201, 201A, 201 B, 201 C), qui est connectable via un réseau à un système de gestion (108, 110, 111) et qui est connecté à une unité de communication par radio (202, 202A, 202B, 202C), dans lequel :
- le système de gestion (108, 110, 111) est apte à gérer un travail sur un produit (101, 101A, 101 B, 101C, 101 E) correspondant à une étiquette de radio-identification (230, 230A, 230B, 230C, 230D, 230E) en utilisant de l'information d'identification mémorisée dans l'étiquette de radio-identification (230, 230A, 230B, 230C, 230D, 230E);
- l'unité de communication par radio (202, 202A, 202B, 202C) est relative à un stade du travail (A, B, C, E) et est apte à lire/écrire de l'information dans l'étiquette de radio-identification (230, 230A, 230B, 230C, 230D, 230E) en utilisant une communication par radio ; et
- le dispositif de commande (201, 201A, 201 B, 201 C) comprend une unité de communication par réseau pour communiquer via le réseau,
**caractérisé en ce que** le dispositif de commande (201, 201A, 201 B, 201 C) comprend en outre :
- une unité de détermination (204) apte à déterminer que le dispositif de commande (201, 201A, 201 B, 201 C) doit opérer dans un mode réseau utilisant le réseau si l'importance de la charge du réseau ou le temps nécessaire pour communiquer avec le système de gestion (108, 110, 111) via le réseau est inférieur à une référence prédéterminée et que le dispositif de commande (201, 201A, 201 B, 201 C) doit opérer dans un mode non-réseau n'utilisant pas le réseau si l'importance de la charge ou le temps nécessaire est égal ou supérieur à la référence prédéterminée ; et
- une unité de commande (204, 205, 206, 207) apte à commander l'unité de communication par radio (202, 202A, 202B, 202C) pour écrire, dans l'étiquette de radio-identification (230, 230A, 230B, 230C, 230D, 230E), de l'information additionnelle (231A, 231 B, 231 C) correspondant au stade (A, B, C, E) lorsqu'il est déterminé que le dispositif de commande (201, 201A, 201 B, 201 C) doit opérer en mode non-réseau et à commander pour transmettre l'information additionnelle (231A, 231 B, 231 C) au système de gestion (108, 110, 111) lorsqu'il est déterminé que le dispositif de commande (201, 201A, 201 B, 201 C) doit opérer en mode réseau.

2. Dispositif de commande (201, 201A, 201 B, 201 C) selon la revendication 1, dans lequel l'importance de la charge est surveillée par un dispositif de surveillance de charge (210).

3. Dispositif de commande (201, 201A, 201 B, 201 C) selon la revendication 1, comprenant en outre une unité de mémorisation (208) apte à relier l'information additionnelle (231A, 231 B, 231 C) à l'information d'identification et à les mémoriser, dans lequel, lorsqu'il est déterminé que le dispositif de commande (201, 201A, 201 B, 201 C) doit opérer en mode réseau, l'unité de commande (205) relie l'information additionnelle (231A, 231 B, 231 C) à l'information d'identification et les mémorise dans l'unité de mémorisation (208), et à autoriser l'unité de communication par réseau à transmettre, au système de gestion (108, 110, 111) via le réseau, l'information d'identification et l'information additionnelle (231A, 231 B, 231 C) qui sont mémorisées dans l'unité de mémorisation (208).

4. Dispositif de commande (201, 201A, 201 B, 201 C) selon la revendication 3, comprenant en outre une unité de surveillance de réponse (203) apte à surveiller le temps nécessaire pour que l'unité de communication par réseau communique avec le système de gestion (108, 110, 111).

5. Dispositif de commande (201, 201A, 201 B, 201 C) selon la revendication 4,
- dans lequel l'unité de surveillance de réponse (203) calcule un temps de réponse moyen sur la base du temps nécessaire pour communiquer avec le système de gestion (108, 110, 111) environ une ou plusieurs fois et compare le temps de réponse moyen avec un seuil prédéterminé, et
- dans lequel le temps nécessaire sur la base duquel l'unité de détermination (204) détermine est le temps de réponse moyen.

6. Dispositif de commande (201, 201A, 201 B, 201 C) selon la revendication 1, dans lequel l'information additionnelle (231A, 231 B, 231 C) inclut au moins l'une d'une information de stade pour identifier un stade (A, B, C, E), d'une date de début à laquelle un produit (101, 101A, 101 B, 101C, 101 E) correspondant à l'étiquette de radio-identification (230, 230A, 230B, 230C, 230D, 230E) a passé le stade (A, B, C, E) et d'une date de fin.

7. Dispositif de commande (201, 201A, 201 B, 201 C) selon la revendication 1, dans lequel l'information d'identification inclut au moins l'une d'une information pour identifier l'étiquette de radio-identification (230, 230A, 230B, 230C, 230D, 230E) et d'une information pour identifier le produit (101, 101A, 101 B, 101C, 101 E).

8. Dispositif de commande (201, 201A, 201 B, 201 C) selon la revendication 1, dans lequel, lorsque l'unité de détermination (204) détermine que le dispositif de commande (201, 201A, 201 B, 201 C) doit opérer en mode réseau, l'unité de commande (206) autorise l'unité de communication par radio (202, 202A, 202B, 202C) à écrire l'information additionnelle (231A, 231 B, 231 C) dans l'étiquette de radio-identification (230, 230A, 230B, 230C, 230D, 230E).

9. Système de commande qui commande la communication entre le système de gestion (108, 110, 111) de la revendication 1 et une pluralité de premières unités de communication par radio (202, 202A, 202B, 202C), dont chacune est l'unité de communication par radio (202, 202A, 202B, 202C) de la revendication 1,
**caractérisé en ce que** le système de commande comprend :
- le dispositif de commande (201, 201A, 201 B, 201 C) selon l'une quelconque des revendications 1 à 8 ;
- une unité de surveillance d'état de réseau (210) apte à surveiller et à sortir l'importance de la charge ou le temps nécessaire ; et
- une unité de collecte d'information (220) pourvue d'une seconde unité de communication par radio (221) pour lire, dans l'étiquette de radio-identification (230, 230A, 230B, 230C, 230D, 230E), l'information d'identification et l'information additionnelle écrite (231A, 231 B, 231 C) en utilisant une communication par radio, et une première unité de mémorisation (223) apte à mémoriser l'information d'identification lue et l'information additionnelle (231A, 231 B, 231 C).

10. Procédé pour un processeur (201, 201A, 201 B, 201 C) commandant la communication via un réseau entre un système de gestion (108, 110, 111) et une pluralité d'unités de communication par radio (202, 202A, 202B, 202C), dans lequel :
- le système de gestion (108, 110, 111) gère un travail sur un produit (101, 101A, 101 B, 101C, 101 E) correspondant à une étiquette de radio-identification (230, 230A, 230B, 230C, 230D, 230E) en utilisant de l'information d'identification mémorisée dans l'étiquette de radio-identification (230, 230A, 230B, 230C, 230D, 230E);
- chacune de la pluralité d'unités de communication par radio (202, 202A, 202B, 202C) est prévue en relation avec un stade (A, B, C, E) du travail, et lit/écrit de l'information dans l'étiquette de radio-identification (230, 230A, 230B, 230C, 230D, 230E) en utilisant une communication par radio ; et
- le procédé comprend une étape de réception d'information d'identification de l'une de la pluralité d'unités de communication par radio (202, 202A, 202B, 202C) recevant, de l'unité de communication par radio (202, 202A, 202B, 202C), l'information d'identification lue dans l'étiquette de radio-identification (230, 230A, 230B, 230C, 230D, 230E),
**caractérisé en ce que** le procédé comprend en outre :
- une étape de détermination (S101, S102) consistant à déterminer que le processeur (201, 201A, 201 B, 201 C) doit opérer dans un mode non-réseau n'utilisant pas le réseau si l'importance de la charge du réseau ou le temps nécessaire pour communiquer avec le système de gestion (108, 110, 111) via le réseau est égal ou supérieur à une référence prédéterminée et que le processeur (201, 201A, 201 B, 201 C) doit opérer dans un mode réseau utilisant le réseau si l'importance de la charge ou le temps nécessaire est inférieur à la référence prédéterminée ; et
- une étape de délivrance d'instruction d'écriture (S108) consistant à délivrer une instruction ordonnant à l'unité de communication par radio (202, 202A, 202B, 202C) qui lit l'information d'identification à l'étape de réception d'information d'identification d'écrire, dans l'étiquette de radio-identification (230, 230A, 230B, 230C, 230D, 230E), de l'information additionnelle (231A, 231 B, 231 C) correspondant à un stade (A, B, C, E) correspondant à l'unité de communication par radio (202, 202A, 202B, 202C) lorsqu'il est déterminé à l'étape de détermination (S101, S102) que le processeur (201, 201A, 201 B, 201 C) doit opérer en mode non-réseau ; et
- une étape de commande de transmission (S105) consistant à transmettre l'information additionnelle (231A, 231B, 231C) au système de gestion (108, 110, 111) lorsqu'il est déterminé à l'étape de détermination (S101, S102) que le processeur (201, 201A, 201 B, 201 C) doit opérer en mode réseau.

11. Procédé selon la revendication 10, dans lequel l'étape de commande de transmission (S105) comprend :
- une étape de mémorisation consistant à relier l'information additionnelle (231A, 231 B, 231 C) à l'information d'identification et à les mémoriser ; et
- une étape de transmission consistant à transmettre, au système de gestion (108, 110, 111) via le réseau, l'information d'identification et l'information additionnelle (231A, 231 B, 231 C) qui sont mémorisées dans l'unité de mémorisation (208).

12. Procédé selon la revendication 11, comprenant en outre une étape de surveillance de réponse consistant à surveiller le temps nécessaire pour communiquer avec le système de gestion (108, 110, 111) à l'étape de transmission.

13. Procédé selon la revendication 10, dans lequel l'information additionnelle (231A, 231 B, 231 C) inclut au moins l'une d'une information de stade pour identifier un stade (A, B, C, E), d'une date de début à laquelle un produit (101, 101A, 101 B, 101C, 101 E) correspondant à l'étiquette de radio-identification (230, 230A, 230B, 230C, 230D, 230E) a passé le stade (A, B, C, E) et d'une date de fin.

14. Support de mémorisation lisible par processeur sur lequel est enregistré un programme de commande apte à permettre à un processeur (201, 201 A, 201 B, 201 C) de commander la communication via un réseau entre un système de gestion (108, 110, 111) et une pluralité d'unités de communication par radio (202, 202A, 202B, 202C) selon un procédé selon l'une quelconque des revendications 10 à 13, dans lequel :
- le système de gestion (108, 110, 111) gère un travail sur un produit (101, 101A, 101B, 101C, 101E) correspondant à une étiquette de radio-identification (230, 230A, 230B, 230C, 230D, 230E) en utilisant de l'information d'identification mémorisée dans l'étiquette de radio-identification (230, 230A, 230B, 230C, 230D, 230E);
- chacune de la pluralité d'unités de communication par radio (202, 202A, 202B, 202C) est prévue en relation avec un stade (A, B, C, E) du travail, et lit/écrit de l'information dans l'étiquette de radio-identification (230, 230A, 230B, 230C, 230D, 230E) en utilisant une communication par radio.
